# EUROPEAN PATENT SPECIFICATION

(11) **EP 4 545 154 B1**
(45) Date of publication and mention of the grant of the patent: **09.12.2026**
(21) Application number: 24217774.9
(22) Date of filing: 13.01.2022
(51) Int. Cl.: A63B 69/12, G05D 7/06, A63B 24/00

(54) **SWIM IN PLACE POOL/SPA**
SCHWIMMBAD/SPA
BAIN EN PLACE POUR PISCINE/SPA

(30) Priority: 13.01.2021 US 202163136828 P
(43) Date of publication of application: 30.04.2025
(62) Document number(s) of the earlier application(s) in accordance with Art. 76 EPC: 22151471.4 / 4 029 576
(73) Proprietor: Hydropool Inc., Mississauga, ON L5T 2L6 (CA)
(72) Inventor: BADITA, Nicolae, Mississauga, Ontario, ON L5T 2L6 (CA); WYATT Jr., Douglas Robert, Mississauga, Ontario, ON L5T 2L6 (CA)
(74) Representative: KIPA AB

(56) References cited:
- EP-A1- 3 188 482
- FR-A1- 2 822 183
- JP-A- H01 170 481
- US-A1- 2013 237 375

## Description

### CROSS REFERENCE TO RELATED APPLICATIONS

### FIELD

The disclosure generally relates to the field of swim in place pools, and more specifically to the systems for controlling the circulating flow rate of water.

### INTRODUCTION

Swim in place pools (including swim-spas) have a water circulation system which pumps water from one end (front) of the basin to the other end (rear) of the basin, thus generating a flow such as a river in which the user can swim without moving relative to a land reference. Using such systems, the user can swim in an uninterrupted manner in a relatively small volume of water. Indeed, by swimming at the speed of the flow of water, the user can stay in place as he/she swims. Different users have different preferences in terms of swimming speeds. For instance, some users may prefer casual swimming whereas others can prefer swimming at a higher intensity. The swimming speed is directly related to the speed of the water in the basin. It was known to provide water circulation systems which allowed more than one speed of water, so as to be adaptable to various user preferences. Although known systems were satisfactory to a certain degree, there remained room for improvement. In particular, the operation of adjusting the speed was uncomfortable, burdensome or strenuous to the user.
JP H01 170481 A describes a relative speed between a swimmer and water and allow continuous swimming in a narrow water tank, by controlling the circulating quantity of a flowing water generator with the signal of two sensing sections at least for sensing the position of the swimmer, and by controlling a flowing water speed automatically.

### SUMMARY

There is provided a swim in place pool where the speed of the water flow is automatically adjusted while a swimmer is swimming.

In accordance with one aspect, there is provided a swim in place system. The system comprises a swim in place pool, at least one sensor, at least one pump associated with said at least one sensor, at least one processor, and a memory comprising one or more swimmer body templates; and instructions which when executed by the at least one processor configure the at least one processor to receive sensor data from at least one sensor; receive infrared (IR) images and swimming patterns from a Time of Flight (ToF) IR sensor, of a swimmer in a swim in place pool; build a three-dimensional (3D) map of the swimmer, using the IR images and swimming patterns using an Artificial Neural Network (ANN) microprocessor; compare the 3D map with one or more swimmer stored templates, to obtain a corresponding comparison score similarity for each of the one or more swimmer stored templates by the ANN microprocessor; authenticate, by the ANN microprocessor a swimmer identity when the corresponding comparison score similarity for a swimmer stored template is higher than a threshold value; actuate at least one pump in the swim in place pool, the at least one pump associated with the at least one sensor to set an angular speed of the at least one pump when the swimmer is positioned inside a set perimeter within said swim in place pool; learn, by an AI, the behaviour of the swimmer to generate and maintain the authenticated swimmer identity; predict, based on the authenticated swimmer identity, when to actuate, increase, or decrease the Rotations Per Minutes (RPM) of the at least one pump; and adjust the RPM of the at least one pump as required to keep the swimmer as close as possible to the centre or middle of the swim in place pool.

In accordance with another aspect, there is provided a swim in place method. The method comprises
- receiving sensor data from at least one sensor;
- receiving infrared (IR) images and swimming patterns from a Time of Flight (ToF) IR sensor, of a swimmer in a swim in place pool;
- building a three-dimensional (3D) map of the swimmer, using the IR images and swimming patterns using an Artificial Neural Network (ANN) microprocessor;
- comparing the 3D map with one or more swimmer stored templates, to obtain a corresponding comparison score similarity for each of the one or more swimmer stored templates by the ANN microprocessor;
- authenticating, by the ANN microprocessor a swimmer identity when the corresponding comparison score similarity for a swimmer stored template is higher than a threshold value;
- actuating at least one pump in the swim in place pool... when the swimmer is positioned inside a set perimeter;
- learning, by an AI, the behaviour of the swimmer to generate and maintain the authenticated swimmer identity; * predicting, based on the authenticated swimmer identity, when to actuate, increase, or decrease the Rotations Per Minutes (RPM) of the at least one pump;and
- adjusting the RPM of the at least one pump as required to keep the swimmer as close as possible to the centre or middle of the swim in place pool.

The following embodiment does not form part of the claimed invention but is an example useful for understanding the invention. In accordance with another aspect, there is provided a swim in place pool comprising a basin for receiving water therein, at least one circulation subsystem, at least one sensor for detecting a location of the object relative to a centre of the basin, and a controller subsystem to control valve actuators and pumps of the at least one circulation subsystem. The basin has a rear end and a front end, and is adapted to receive an object. The at least one circulation subsystem comprises a primary conduit extending from an inlet located at the rear end of the basin, a circulation conduit leading to a circulation outlet located at the front end of the basin and configured to create a swimming flow in the basin with the primary conduit inlet, a diverter conduit having a diverter outlet leading into the basin, a pump operable to pump water from the primary conduit inlet, and a diverter valve connecting the primary conduit to both the circulation conduit and the diverter conduit and having a valve actuator operable to adjust the relative ratio of the water pumped from the primary conduit inlet between the circulation conduit and the diverter conduit. The controller subsystem comprises at least one processor, and a memory comprising instructions which when executed by the at least one processor configure the at least one processor to: actuate at least one valve actuator and associated pump of the at least one circulation system when the object is located between a corresponding sensor and the centre of the basin.

The following embodiment does not form part of the claimed invention but is an example useful for understanding the invention. In accordance with another aspect, there is provided a swim in place system. The system comprises a swim in place pool, at least one sensor, at least one pump associated with said at least one sensor, at least one processor, and a memory comprising instructions which when executed by the at least one processor configure the at least one processor to receive object location data from at least one sensor of a swim in place pool, and actuate a corresponding at least one pump associated with the at least one sensor when the object is not at an approximate centre of said swim in place pool.

The following embodiment does not form part of the claimed invention but is an example useful for understanding the invention. In accordance with another aspect, there is a swim in place method. The method comprises receiving object location data from at least one sensor of a swim in place pool, and actuating a corresponding at least one pump associated with the at least one sensor when the object is not at an approximate centre of said swim in place pool.

Many further features and combinations thereof concerning the present improvements will appear to those skilled in the art following a reading of the present disclosure.

### DESCRIPTION OF THE FIGURES

Embodiments will be described, by way of example only, with reference to the attached figures, wherein in the figures:
**FIG. 1** illustrates an example of a swim in place pool/spa system, in accordance with some embodiments;
**FIG. 2** illustrates, in a flowchart, an example of a swim in place pool/spa method, in accordance with some embodiments;
**FIG. 3** illustrates, in a schematic diagram, an example of a swim spa intelligent flow control system modules and interconnections, in accordance with some embodiments;
**FIG. 4** illustrates, in a schematic diagram, an example of a swim spa system showing algorithm configurations, in accordance with some embodiments;
**FIG. 5** illustrates, in a flowchart, an example of method of predicting a swimmer's position in the swim spa system, in accordance with some embodiments;
**FIGs. 6A** to **6G** illustrate, in schematic diagrams, examples of sensor configurations of a swim spa system, in accordance with some embodiments;
**FIG. 7** illustrates a generic ToF proximity sensor system, in accordance with some embodiments;
**FIG. 8** illustrates, in a flowchart, a method of determining a swimmer's identity, in accordance with some embodiments;
**FIG. 9** illustrates ultrasonic waves emitted by the system, in accordance with some embodiments;
**FIG. 10** illustrates an example of a 3D visualization, in accordance with some embodiments;
**FIG. 11A** is an oblique view of an example of a swim in place pool with an automatic water diversion system, in accordance with some embodiments;
**FIG. 11B** is a front elevation view of the swim in place pool of **FIG. 11****A;**
**FIG. 11C** is a front elevation view of another example of a swim in place pool with an automatic water diversion system, in accordance with some embodiments;
**FIG. 11D** is a front elevation view of another example of a swim in place pool with an automatic water diversion system, in accordance with some embodiments;
**FIG. 12A** is an exploded view of a diverter valve, without the actuator, of the swim in place pool of **FIG. 11****A;**
**FIG. 12B** is a side view of an actuator of the swim in place pool of **FIG. 11A****;**
**FIG. 12C** illustrates an example of a user interface of the swim in place pool of **FIG. 11A****;**
**FIG. 13A** illustrates, an example of a VSP subsystem, in accordance with some embodiments;
**FIG. 13B** shows an example of the PMSM in an axial view, in accordance with some embodiments;
**FIG. 14A** shows an example of a three phase bridge inverter, in accordance with some embodiments;
**FIG. 14B** shows an example of an isolated phase current sense reference design with LEM Hall sensors, in accordance with some embodiments;
**FIG. 15A** illustrates, in a block diagram, an example of a sensorless FOC algorithm, in accordance with some embodiments;
**FIG. 15B** illustrates, in a schematic diagram, an example of a sensorless FOC with fuzzy I_{Q REF} controller and position speed estimator for one motor, in accordance with some embodiments;
**FIG. 16A** illustrates, a vector representation of different reference frames, in accordance with some embodiments;
**FIG. 16B** illustrates an example of a Clarke transformation, in accordance with some embodiments;
**FIG. 16C** illustrates an example of an inverse Clarke transformation, in accordance with some embodiments;
**FIG. 16D** illustrates an example of a Park transformation, in accordance with some embodiments;
**FIG. 16E** illustrates an example of an inverse Park transformation, in accordance with some embodiments;
**FIG. 16F** illustrates, in a schematic diagram, an example of a method of controlling a VSP, in accordance with some embodiments;
**FIG. 17** illustrates an example of a PMSM motor axis, in accordance with some embodiments;
**FIG. 18** illustrates, in a circuit diagram, an example of an equivalent circuit of PMSM, in accordance with some embodiments;
**FIG. 19** illustrates, in a circuit diagram, an example of a PMSM d-q-axis dynamic equivalent circuit, in accordance with some embodiments;
**FIG. 20** illustrates, in a block diagram, an example of a proportional-integral-derivative (PID) controller, in accordance with some embodiments;
**FIG. 21** illustrates, in a block diagram, an example of a proportional integral (PI) controller, in accordance with some embodiments;
**FIG. 22** illustrates, in a block diagram, an example of a linear quadratic regulator (LQR) controller, in accordance with some embodiments;
**FIG. 23** illustrates, in a block diagram, an example of an adaptive fuzzy sliding mode control (SMC) controller, in accordance with some embodiments;
**FIG. 24** illustrates, in a block diagram, an example of an adaptive controller for motor drive, in accordance with some embodiments;
**FIG. 25** illustrates, in a schematic diagram, an example of the disturbance observer based control method, in accordance with some embodiments;
**FIG. 26A** illustrates, in a block diagram, an example of an application of an FLC, in accordance with some embodiments;
**FIG. 26B** illustrates, in a block diagram, an example of the FLC in more detail;
**FIG. 26C** illustrates, in a block diagram, an example of sensorless field oriented control using FLC, in accordance with some embodiments;
**FIG. 27A** illustrates, in a block diagram, a detailed example of an ANN speed controller which can be used in a FOC, in accordance with some embodiments;
**FIG. 27B** illustrates, in a block diagram, an example of PMSM Sensorless Field Oriented Control using the ANN speed controller illustrated in **FIG.27A** applied to the swim spa system, in accordance with some embodiments;
**FIG. 27C** illustrates, in a block diagram, an example of common PMSM Sensorless Field Oriented Control using PI speed controller applied to the swim spa system, in accordance with some embodiments;
**FIG. 27D** illustrates, in a block diagram, an example of PMSM sensorless field oriented control using ANN speed controller applied to the swim spa system, in accordance with some embodiments;
**FIG. 27E** illustrates, in a block diagram, an example of an ANN speed controller with input/output configuration, in accordance with some embodiments;
**FIG. 28** illustrates, in a schematic diagram, an example of an ANN algorithm configuration for a swim spa system, in accordance with some embodiments;
**FIG. 29A** illustrates, in a block diagram, an example of sensorless FOC using ANN position and speed estimator, in accordance with some embodiments;
**FIG. 29B** illustrates, in a block diagram, another example of sensorless FOC using ANN position and speed estimator, and FLC speed controller, in accordance with some embodiments;
**FIG. 29C** illustrates, in a block diagram, an example of an ANN position and speed estimator with input/output configuration, in accordance with some embodiments;
**FIG. 29D** illustrates, in a block diagram, another example of sensorless FOC using ANN position and speed estimator, in accordance with some embodiments;
**FIG. 30A** illustrates, in a schematic diagram, an example of a sensorless FOC with fuzzy I_{Q REF} controller and ANN position speed estimator for two motors, in accordance with some embodiments;
**FIG. 30B** illustrates, in a schematic diagram, another example of a single SVM/PWM bridge sensorless FOC with fuzzy I_{Q REF} controller and ANN position speed estimator for two motors, in accordance with some embodiments;
**FIG. 30C** illustrates, in a schematic diagram, an example of a sensorless FOC with fuzzy I_{Q REF} controller and ANN position speed estimator for a six-phase motor, in accordance with some embodiments;
**FIG. 30D** illustrates, an example of a winding arrangement of a six-phase PMSM, in accordance with some embodiments; and
**FIG. 31** illustrates, in a schematic diagram, an example of a computing device such as a server.

It is understood that throughout the description and figures, like features are identified by like reference numerals.

### DETAILED DESCRIPTION

Embodiments of methods, systems, and apparatus are described through reference to the drawings.

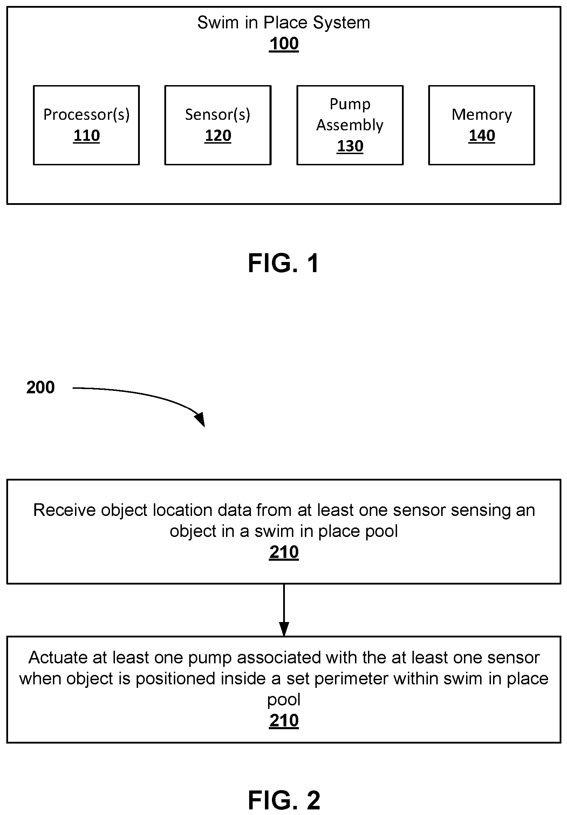

In some embodiments, an intelligent flow control system for a swim in place pool/spa is provided. **FIG. 1** illustrates an example of a swim in place pool/spa system **100,** in accordance with some embodiments. The intelligent flow control system **100** may be an artificial intelligence device, or a swim teaching device. The intelligent flow control system **100** may comprise a processor **110,** a sensor **120,** and an intelligent pump assembly **130.** In some embodiments, the processor **110** may be driven by machine learning or artificial intelligence and may process instructions stored in a memory **140.** In some embodiments, the sensor **120** may comprise a Lidar sensor, a ToF sensor, or a video camera, or a set of sensors (such as IR, electromagnetic sensors, etc.) or a combination thereof. In some embodiments, the intelligent pump assembly 130 may comprise a set of intelligent pumps (for example one or more pumps) comprising an electrical motor controlled by a smart motor drive which may comprise a PLC or an advanced intelligent system (having Al/ML methods dedicated to the motor / sensors control and communication with the central processor). Other components may be added to the system **100.**

**FIG. 2** illustrates, in a flowchart, an example of a swim in place pool/spa method **200,** in accordance with some embodiments. The method **200** comprises receiving **210** object location data from at least one sensor **120,** the object positioned in a swim in place pool. Next, at least one pump **130** associated with the at least one sensor **120** is actuated **220** when the object is positioned inside a set perimeter within said swim in place pool. Other steps may be added to the method **200.**

In some embodiments, the swim in place pool/spa intelligent flow control system **100** may have at least one or more (could be two or more) variable speed pumps controlled by an intelligent flow control system which is capable to train and to make predictions using artificial intelligence/ neural network algorithms and specific sensors for an accurate feedback. In some embodiments, electromagnetic waves sensors (EM Wave sensors) are used that work underwater and have high speed of data transmission. Further details of the new system are presented below.

### Autonomous Mode

In some embodiments, the swim spa may include an autonomous mode. For example, a swim spa system may comprise a system with one, two or more pumps typically designed to create a strong water current to emulate the swimming experience. The water current is produced by a hydraulic system involving centrifugal pumps feeding dedicated nozzles. The volume of water could be high (around 1000 gallons per minute (GPM)/ nozzle), the flow may be adjusted according to the swimmer's wish, and up-thrust actions may be controlled by changing the torque of the motors using pulse width modulation (PWM) to give the desired output.

The control of the swim spa water flow using centrifugal pumps with variable speed motor controlled by artificial neural network (ANN) algorithms (including hybrids) provides: simple design, high range of water flow, better payload, quick response and very good performance (it covers all types of swimmers from beginners to professional).

The swim spa system does not have complex mechanical control linkages due to the fact that it relies on centrifugal pumps and uses the variation in motor speed for flow control. However, controlling a swim spa flow is not easy because of the water dynamics and turbulence. In addition, the dynamics of the water flow are highly non-linear and several uncertainties are encountered during the process, thereby making the control a challenging venture. This has led to several control algorithms being proposed in the literature.

In autonomous mode, the swim spa system may generate its flow by controlling the motor rotor angle and speed (flux). The swim spa control system has two main modules: software (including algorithm) and hardware (including the sensors).

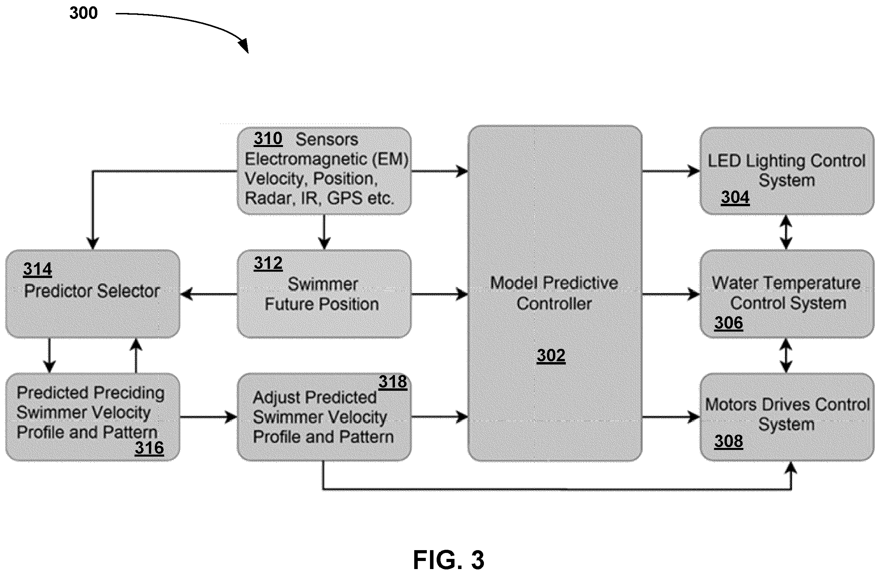

**FIG.** 3 illustrates, in a schematic diagram, an example of a swim spa intelligent flow control system modules and interconnections **300,** in accordance with some embodiments. A model predictive controller **302** communicates with a light emitting diode (LED) lighting control system **304,** a water temperature control system **306** and a motors drive control system **308.** The water temperature control system **306** also communicates with the LED lighting control system **304** and the motors drive control system **308.**

Sensors **310** (such as electromagnetic (EM) velocity, position, radar, IR, GPC, etc.) may be used to sense a swimmer (i.e., object) current position to be used to predict a swimmer's future position **312.** The sensor **310** information and swimmer future position information **312** may be input into a predictor selector **314** that also communicates with a predicted preceding swimmer velocity profile and pattern model **316.** The model **316** may then be used to adjust a predicted swimmer velocity profile and pattern **318.** The sensor **310** information, swimmer future position **312** and adjusted predicted swimmer velocity profile and pattern **318** information may be input into the model predictive controller **302.** The adjusted predicted swimmer velocity profile and pattern **318** information may also be provided to the motors drives control system **308.**

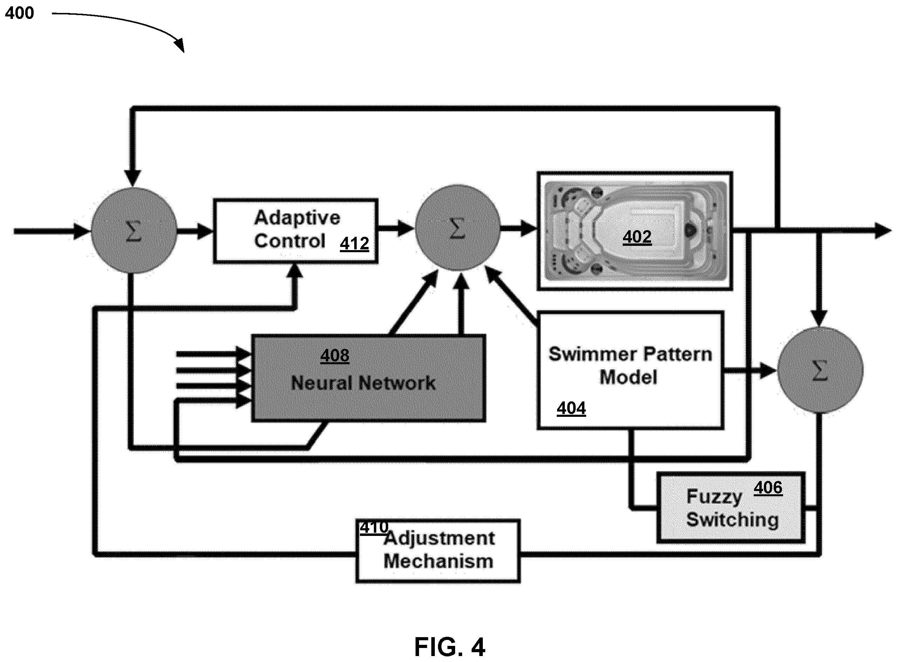

**FIG. 4** illustrates, in a schematic diagram, an example of a swim spa system **400** showing algorithm configurations, in accordance with some embodiments. The system **400** includes the pool **402,** a swimmer pattern model **404,** fuzzy switching **406,** a neural network (or other artificial intelligence network) **408** an adjustment mechanism **410** and an adaptive control unit **412.**

In some embodiments, the system comprises a series of devices: one or more pumps connected through a primary conduit to one or more "high flow" convergent divergent swim jets; the pumps are powered by AC/DC motors (preferred PMSM) having an intelligent variable speed drives (VSD), e.g., sensor less field oriented control drive (FOC with integrated electronics control with serial bus communication i.e. Programmable Logic Controller- PLC); a predictive electronic controller (with Human Machine Interface- HMI) connected to the intelligent variable frequency drives thorough the serial bus (e.g., RS 485); for the feedback from the swimmer the system has sensors mounted around the swim spa basin and portable sensors to the swimmer. The system is adjusting the flow against the swimmer using the user preprogrammed preferred speeds, the data from the sensors and the prediction of the future swimmer position (performance).

In some embodiments, an artificial neural network (ANN) (fuzzy logic) algorithm can predict the location of the swimmer and it adjust the water stream accordingly using the FLC (Fuzzy Logic Controller) to adjust the speed of the water pumps; the model predictive controller algorithm is adjusting the ω_{REF} for the fuzzy logic controller (FLC) and using sensor less FOC model the position of the motor rotor (θ) will be estimated and the necessary angular speed of motor will be setup (ω), the centrifugal pumps will deliver the necessary water flow, The FLC (Fuzzy Logic Controller) algorithm is adaptive and it does what the ANN (Fuzzy) are doing the best, tries to over-fit the relationship.

Artificial Neural Networks (ANN) have many different coefficients, which it can optimize. Hence, it can handle much more variability as compared to traditional models.

In some embodiments, the ideal location of the swimmer is close to the centre or middle of the pool/spa. The ANN may be used to track the location of the swimmer. If the swimmer is not near the centre or middle (or within a front limit, back limit or side limit), the system can then actuate a pump to cause a current to move the swimmer closer to the centre or middle. For example, several sensors and pumps may be placed around the circumference of the pool/spa. When a swimmer is closer to a particular pump that the swimmer should be to be close to the middle of the pool/spa, then that pump may be actuated or adjusted to cause a water current in the pool to adjust thereby causing the swimmer (or object) to move towards the centre of the water surface plane. In some embodiments, the pool/spa may adjust to the swimmers speed by increasing or decreasing the RPM of a pump that is located in front of the swimmer.

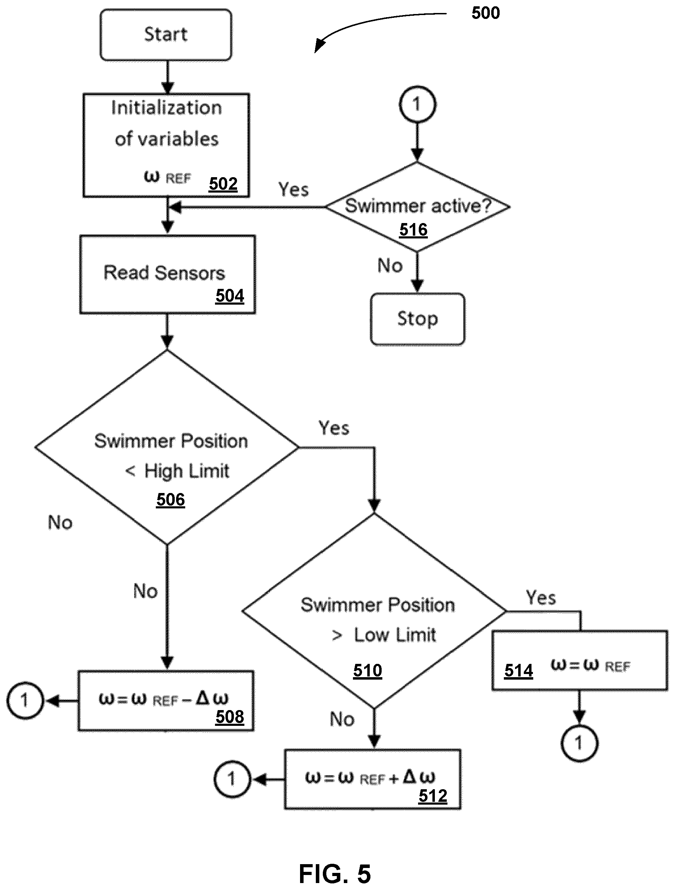

**FIG. 5** illustrates, in a flowchart, an example of method **500** of determining an adjustment of the RPM of a pump to keep a swimmer within a set position in the swim spa system **400,** in accordance with some embodiments. The method **500** comprises initialization **502** of variable such as angular speed of the motor (ω_{REF}). The angular speed is proportional to a last know position of the swimmer (i.e., object). Next, information from the pool sensors is obtained **504.** Using the reference angular speed (ω_{REF}) and the sensor information, a machine learning network may be used to determine an current angular speed (ω) which is proportional to a predicted swimmer's positon. If the swimmer's position is not less than a high limit of a set perimeter of the pool 506, then the current angular speed (ω) is equal to the reference angular speed (ω_{REF}) less a change in angular speed (Δω). Therefore, the change in angular speed (Δω) can be determined **508** (ω = ω_{REF} - Δω) and the RPM of a pump adjusted by that change in angular speed.

If the swimmer's position was less than a high limit of a set perimeter of the pool **506,** and if the swimmer's position is not greater than a low limit of the set perimeter of the pool **510,** then the current angular speed (ω) is equal to the reference angular speed (ω_{REF}) plus a change in angular speed (Δω). Therefore, the change in angular speed (Δω) can be determined **512** (ω = ω_{REF} + Δω) and the RPM of a pump adjusted by that change in angular speed.

If the swimmer's position was less than a high limit of a set perimeter of the pool **506,** and if the swimmer's position is greater than a low limit of the set perimeter of the pool **510,** then the current angular speed (ω) is equal to the reference angular speed (ω_{REF}) **514** (ω = ω_{REF}) and no change in RPM of the pump is required.

Once a current angular speed an amount of change in RPM required is determined **508, 512, 514,** the system checks the sensor to see if the swimmer is active **516.** If so **516,** then steps **504** to **516** repeat. In this manner, the system is constantly monitoring the swimmer while they are active. If the swimmer is no longer active **516,** then the method **500** stops. Further details regarding the high and low limits of the set perimeter, and further details of the calculations for angular speed are provided below.

### Swimming Style Recognition, Lap Counting and Performance Using LiDAR, HRM Sensor and Deep Learning

Deep learning comes from the use of multiple layers in the network. Deep learning is a modern variation which is concerned with an unbounded number of layers of bounded size, which permits practical application and optimized implementation, while retaining theoretical universality under mild conditions. In deep learning the layers are also permitted to be heterogeneous and to deviate widely from biologically models, to obtain high efficiency, trainability and understandability. Deep-learning architectures such as deep neural networks, deep belief networks, recurrent neural networks and convolutional neural networks can be applied for swimming style recognition using computer vision, machine vision and voice recognition.

The AI may also learn the behaviour of the swimmer, and generate and maintain a profile. For example, if a swimmer's profile shows that the swimmer tends to swim at a first speed during a first time period and then switch to a second speed at a second time period, the system may predict when to actuate/increase/decrease the RPM of one or more pumps as required to keep the swimmer as close as possible to the centre/middle of the pool/spa. In some embodiments, a combination of predictive analytics and real-time analytics may be used. In some embodiments, the swimmer profile may assist with polling strategies when determining conflicting sensor readings in order to determine which sensor readings are more likely to be a reflection of the swimmer's actual current position.

In some embodiments, the pumps of the pool/spa may be used to set up a routine exercise for the swimmer. Should the swimmer not be able to keep pace with the routine, the pool/spa may automatically adjust the pumps such that the swimmer's location is closer to the centre/middle. In some embodiments, a notification (e.g., visual light, audio alarm, audio "coach" voice recording, etc.) may be used if the swimmer is not on pace with the routine to give the swimmer an opportunity to adjust their own speed before the pumps are adjusted.

### Working with any wearable: smartphone, tablet, smart glasses, smart watch etc.

In some embodiments, the swim in place system may be used to assist with training of a swimmer. For examples, sensors may be added to the arms, legs and head (e.g., googles) of a swimmer to monitor the swimmers movement. The swim in place system may provide audio signals (including voice/speech) to notify a swimmer if a body movement is not ideal, and to instruct the swimmer to adjust their body (e.g., arms, legs) movement and/or positioning.

The modern wearable devices are enabled to track and analyze everyday swimmer activities and to recognize them. However, when used in real world conditions, the performance of off-the-shelf devices is often insufficient. The DL algorithm tackles the problem of swimming style recognition (the freestyle, backstroke, breaststroke, and butterfly) and strokes counting using sensors as presented above (including heart rate monitoring sensors, bracelet sensors, watches and smart glasses). In total hundreds hours of this data could be collected from dozens swimmers of diverse backgrounds, performances and styles. The data could then be used to train a convolutional neural network (CNN) to recognize the four main swimming styles, transition periods and strokes. It is estimated that the experimental method could achieved score of 95.0% for style recognition and 98.0% for counting strokes, the score percentage of the results are influenced by the water turbulence (speed of the water stream), temperature of water (viscosity) and the accuracy of the data sensors. The algorithms measure the number of strokes and evaluate the swimmer efficiency level then based on this data they do calculate the distance and calories burn.

In some embodiments, the algorithms can also discern the stroke of swimmers of all skill levels, as well the calories they are burning, the distance they are swimming and the swim time. The data may be collected from more than 50 swimmers and over 500 swim sessions. The algorithms may collect data from swimmers swimming in swim spas while wearing HRM sensors, smart glasses and 2 x ToF sensors at the front and at the end of the swim spa. The swimming style may look similar (i.e., Butterfly vs. Breaststroke) but they affect how many calories the swimmer burnt (Butterfly could burn about 35-45% more calories than Breaststroke).

### Autonomous Mode and Sensors

The swim spa autonomous mode is a choice for the swimmer that offers a completely automatic operating mode adapting and predicting the swimmer behaviour will respond accordingly creating a water stream which will balance the swimmer action; basically using Newton third Law (action and reaction). The reaction is created using centrifugal pumps fed by variable speed motors (primarily PMSM or IPMSM) controlled with an electronic control system based on Artificial Neural Network algorithm which uses as input data the signals from sensors.

There are various types of sensors which could be used: classic sensors (less expensive): IR sensors, electromagnetic sensors, simple two parts laser beam sensors (transmitter and receiver) or detection and ranging methods that can be used in these applications; with the most commonly used being Photo-electric, Ultrasonic, Time-of-Flight, Radar and LiDAR technologies. Normally for ranging applications, considerations include distance, accuracy, and environmental performance.

Each of the methods of ranging stated above has unique strengths and weaknesses. Photoelectric sensors are cheap and fast but have range distance limitations. Ultrasonic gets a low-cost solution but with limited range distance, slower data rate, and performance dependent on surface and angle of attack.

With radar, range distance can be much superior to others, but with potential refresh rate limitations and false echoes.

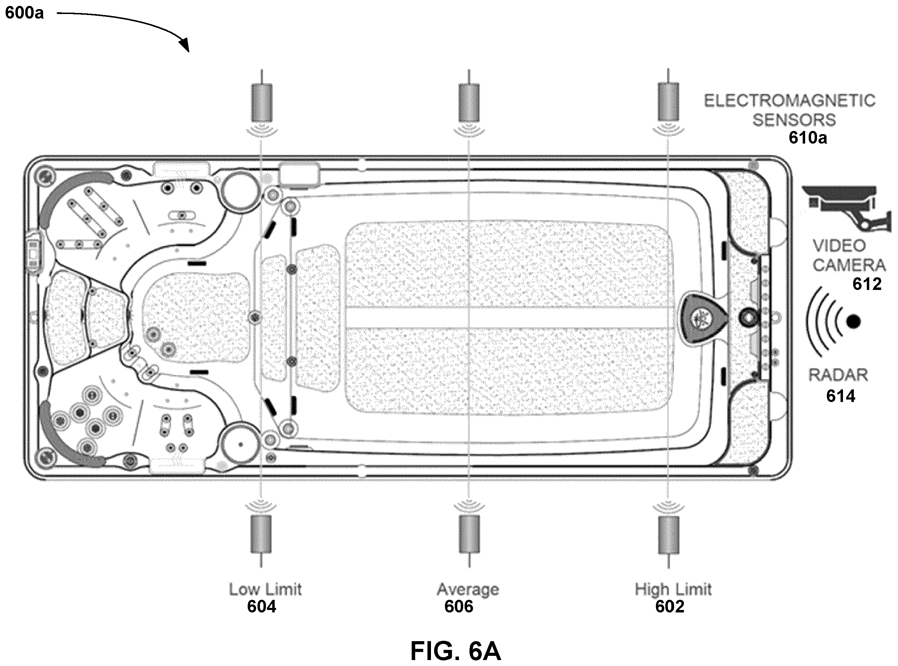

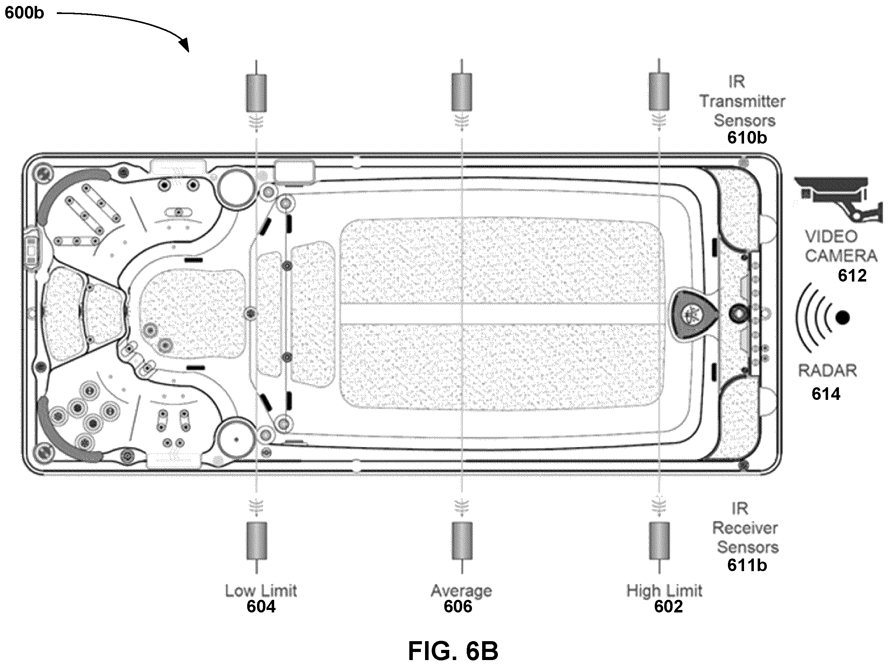

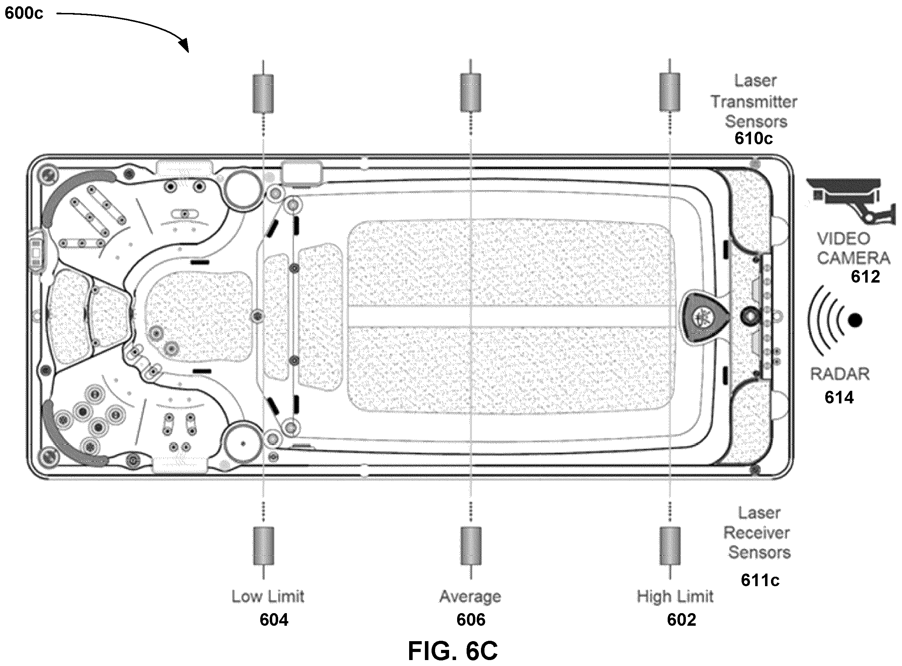

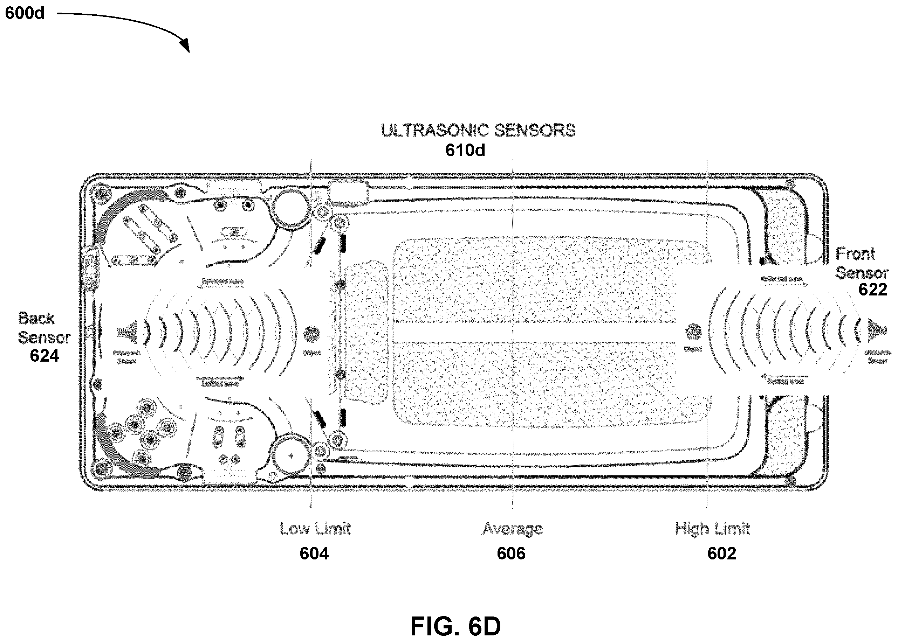

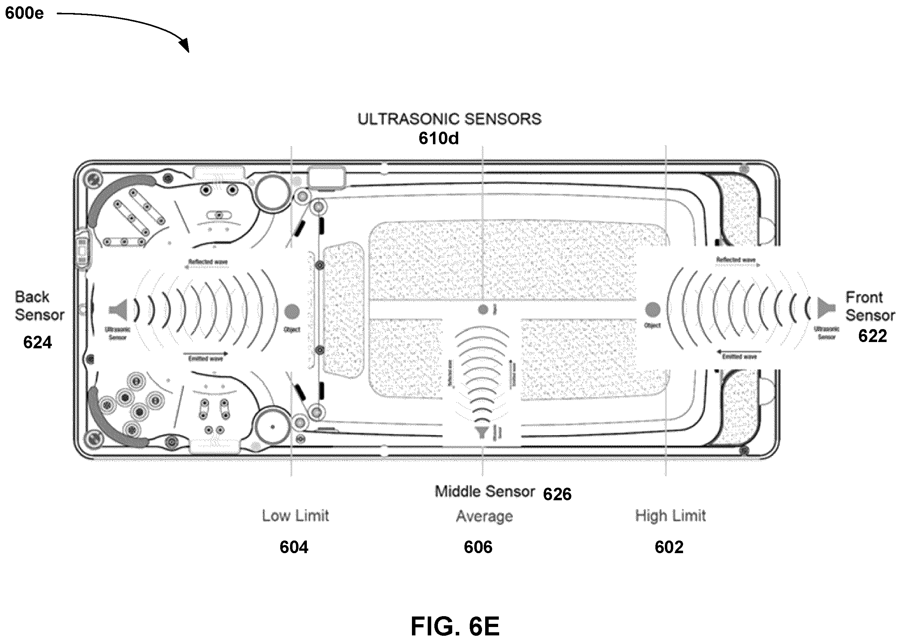

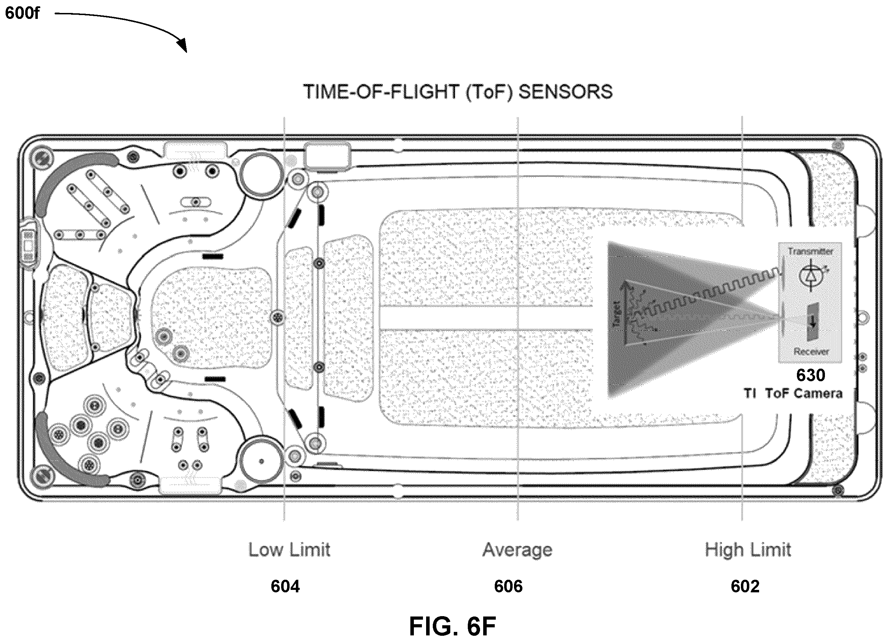

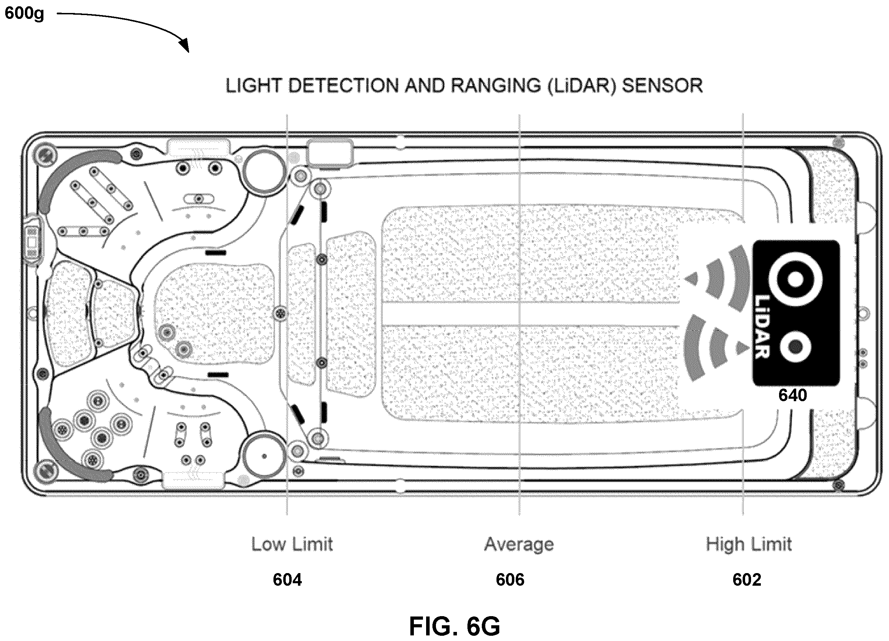

**FIGs. 6A** to **6G** illustrate, in schematic diagrams, examples of sensor configurations **600a** to **600g** of a swim spa system **400,** in accordance with some embodiments. A front or high limit **602,** back or low limit **604** and middle or average limit **606** are shown defining an example of a set perimeter or limits within the swim in place pool. **FIG. 6A** illustrates an example of electromagnetic sensors **610a,** and may include a video camera **612** and radar unit **614.** **FIG. 6B** illustrates an example of infrared (IR) sensors **600b** including IR transmitter sensors **610b** and IR receiver sensors **611b,** and may include the video camera **612** and radar unit **614.** **FIG. 6C** illustrates an example of laser sensors **610c** including laser transmitter sensors **610c** and laser receiver sensors **611c,** and may include the video camera **612** and radar unit **614.** **FIGs. 6D** and **6E** illustrate examples of ultrasonic sensors **610d,** and may include a front sensor **622** and a back sensor **624.** The example of **FIG. 6E** also includes a side or middle sensor **626.** **FIG. 6F** illustrates an example of time-of-flight (ToF) sensors **610f,** and may include a ToF camera having a transmitter and receiver **630.** **FIG. 6G** illustrates an example of light detection and ranging (LiDAR) sensors **610g,** and may include a LiDAR unit **640.** The ToF sensors **610f** and LiDAR sensrs **610g** are further described below.

### Photo-electric sensor

Under the photo-electric principle, a Distance sensor Analog-Front-End (AFE) may use a Time-of-Flight (ToF) principle to help accurate measurement of distance. With an external LED and photodiode, it can be used to implement a high speed, and high resolution distance sensor. With external transmit and receive, the user has the choice of any wavelength of interest (visible or IR), any illumination source (LED or VCSEL), and any field of view based on added optics.

Time-of-Flight technology has certain distinct benefits. Firstly, since it senses at the speed of light, ToF technologies operate very fast compared to other range sensing methods like ultrasonic sensing. (i.e. can provide data up to 4000 samples/second).

Today, Time-of Flight (ToF) systems are technologies that offer to integrate these devices to provide functions such as 3D imaging, proximity sensing, and ambient light sensing and gesture recognition.

### Time-of-Flight Long Range Proximity and Distance Sensing Basics

Light emitter and a receiver form the sensing elements of an Optical time-of-flight (ToF) long range proximity and distance sensing system. The emitter sends modulated light pulses. The emitted light bounces off the objects in the scene and a part of the reflected light comes back to the receiver. The round trip time of the light pulses is measured by the analog front end. The measured time is an indicator of the distance to the object. Emitted light is pulsed continuously with a periodicity determined by the modulation frequency. Since emitted light is periodic, the phase difference between the emitted and the received light is an indicator of the round trip time. The phase determination is aggregated over several cycles of the periodic light modulation.

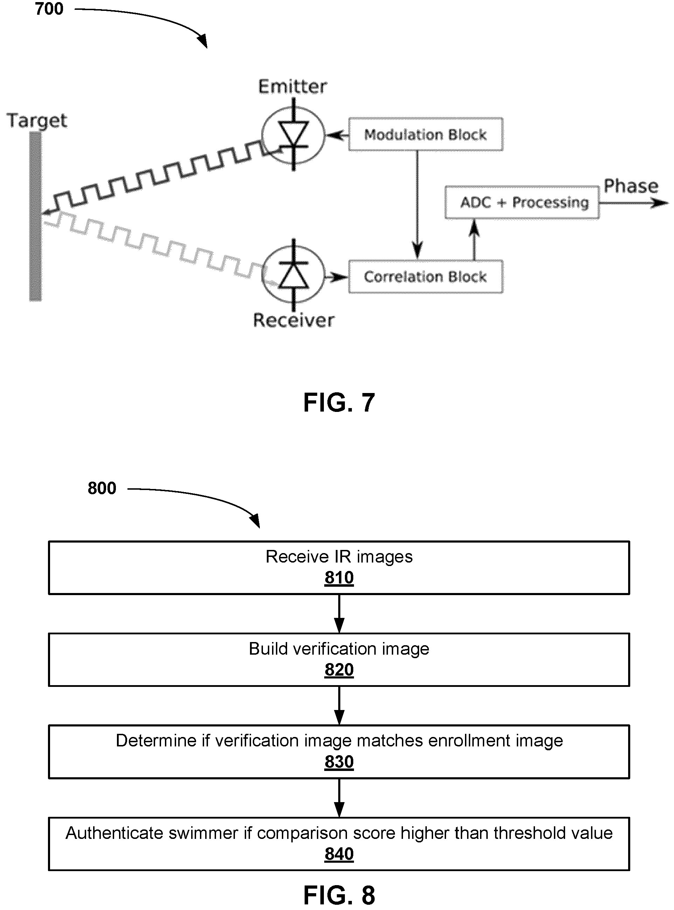

**FIG. 7** illustrates a generic ToF proximity sensor system **700,** in accordance with some embodiments.

Imaging technology with deep learning image analysis techniques enable the swim spa control system to control itself (a fully autonomous control). The swim spa control system ANN algorithm will set up a swimmer ID (virtual swimmer- a 3D map) using the ToF infrared (IR) light to illuminate the swimmer body while capturing the images and swimming pattern (including gestures).

Swimmer body is a 'biometric', a measurable biological characteristic. All biometric authentication systems basically compare two complex patterns and calculate how similar they are. The swimmer should set up a biometric system memorized by the swim spa control system microprocessor and will capture and store the reference patterns, known as a template or 'enrolment image'. At next time uses of swim spa the microprocessor the swimmer will present the microprocessor with a 'verification image'.

The microprocessor computes a score between 0 and 1, if it is closer to 1 that means it is the same swimmer pattern. If it is closer to 0, it is not the same swimmer and if it has the password and the owner permission could set up a new user ID profile, otherwise it cannot use "Auto mode".

As the enrolment and verification images will not be identical due to differences in capture conditions, the system uses a threshold to determine whether they are significantly different. A comparison score of 0.65 might be close enough if a minimum score is not a fixed number.

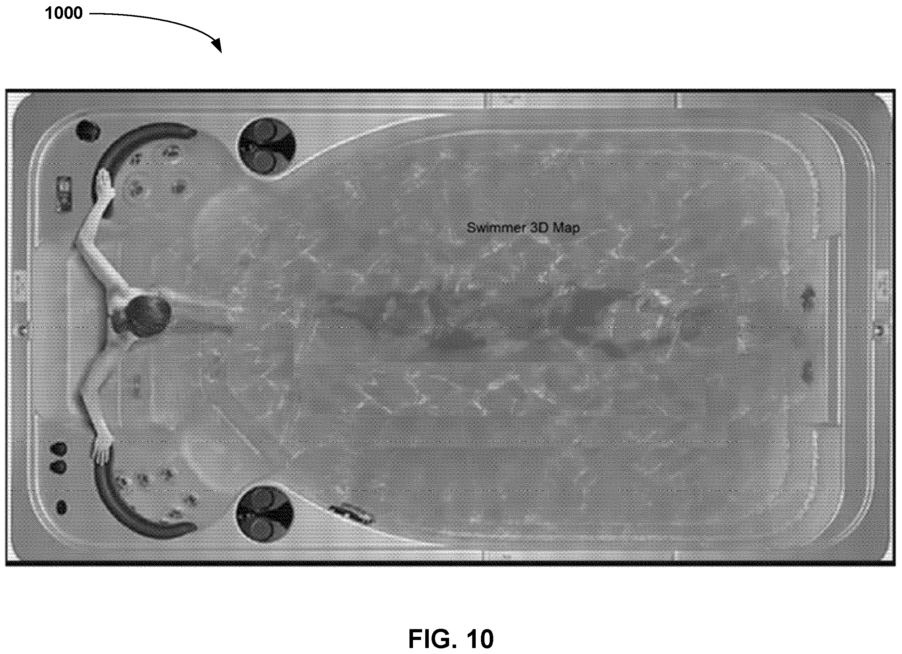

This process may use a microprocessor and an ANN algorithm. **FIG. 8** illustrates, in a flowchart, a method **800** of determining a swimmer's identity, in accordance with some embodiments. The method comprises receiving IR images **810.** The IR images are sent **810** from the ToF to ANN-microprocessor to build **820** a 3D mathematical model (3D map) of swimmer body. For example, a swimmer's height, length, size, and other factors may be used for the model. **FIG. 10** illustrates an example of a visualization of the swimmer using LiDAR sensor technology. The 3D model or 'verification image' is presented to the system's algorithms and compared against one or more swimmer stored template or 'enrolment image'. The processor determines whether the verification and enrolment images match **830,** based on a comparison score of similarity between swimmer images. Next, the processor authenticates swimmer identity **840** and unlocks if the comparison score is higher than a certain threshold value (e.g., 0.65).

### Ultrasonic sensors

Ultrasonic sound waves are vibrations at a frequency above the range of human hearing (>20kHz) that can travel through a wide variety of medium (air or fluid) to detect objects and measure its distance - without making physical contact.

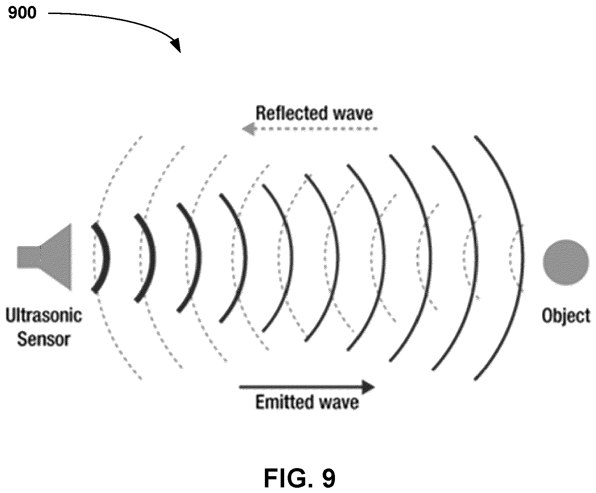

Ultrasonic sensors can be used to detect a wide variety of materials regardless of shape, transparency, or color. **FIG. 9** illustrates ultrasonic waves **900** emitted by the system, in accordance with some embodiments.

Ultrasonic waves transmitted by the system are reflected by objects present in the vicinity. The system receives the reflected wave, or echo, and compares the object's echo amplitude against a threshold to detect the object. The echo for objects that are closer to the system is stronger than that for objects that are farther from the system. Hence, it is relatively common for the threshold to be varied with time, but in this case a variable threshold is not required and that the threshold can remain fixed.

### Ultrasonic distance ranging

Ultrasonic transducers installed in the front, rear and sides (if necessary) of a swim spa tank transmit ultrasonic waves and then receive the ultrasonic waves reflected back by nearby objects (swimmer). An ultrasonic wave's time of flight (TOF) is used to calculate the distance to the swimmer to assist the system control to respond in autonomous mode. In some embodiments, four transducers may be installed with one in each of the front and rear, and one transducer installed in each side.

In an ultrasonic swim spa control system, piezoelectric transducers typically are used to convert electrical signals into ultrasonic waves, and reflected ultrasonic waves into electrical signals.

The low receiver sensitivity of piezoelectric ultrasonic transducers usually results in very small electrical signals when the reflected waves are received. This signal is amplified by an amplifier and is digitized with an analog-to-digital converter (ADC), routed through a bandpass filter (BPF), which is primarily used to improve the signal's signal-to-noise ratio then the filtered signal is compared against a threshold to detect the presence of an object (swimmer). There are ultrasonic sensors optimized for liquid sensing medium with a range (e.g., distance: 0.1 m to 1 m), resolution 0.1 cm, frequency range 31.25kHz - 4MHz.

### Radar Sensor (nanoRadar)

Nano radar is used to detect the targets by transmitting and receiving high-frequency electromagnetic waves. The back-end signal processing module will calculate the target information such as the existence, velocity, direction, distance and angle of the moving object by the analysis of the echo signal. And the millimeter-wave radar has the characteristics of small volume, light weight, high integration, and sensitive sensitivity. Besides, with its unique ability to penetrate fog, smoke and dust, it can realize the applications in all weather and all day.

### Example TI 'mmWave'

'mmWave' is a sensing technology for detection of objects and providing the range, velocity and angle of these objects. It is a contactless-technology which operates in the spectrum between approximately 30GHz and 300GHz. Due to the technology's use of small wavelengths it can provide sub-mm range accuracy and is able to penetrate certain materials such as plastic, drywall, clothing, and is impervious to environmental conditions such as rain, fog, dust and snow.

mmWave sensors transmit signals with a wavelength which is in the millimeter (mm) range. This is considered a short wavelength in the electromagnetic spectrum and is one of the advantages of this technology. Indeed, the size of system components such as antenna required to process mmWave signals is small. Another advantage of short wavelengths is the high resolution. A mmWave system that resolves distances to wavelength has accuracy in the mm range at approximately 76-81GHz.

Additionally, operating in this spectrum makes mmWave sensors interesting for the following reasons:
- Ability to penetrate materials: see through plastic, drywall and clothing
- Highly Directional: compact beam forming with 1° angular accuracy
- Light-like: can be focused and steered using standard optical techniques
- Large absolute bandwidths: distinguish two nearby objects

In one embodiment, a self-contained FMCW radar sensor single-chip solution simplifies the implementation of Automotive Radar sensors in the band of approximately 76 to 81 GHz. It is built on a low-power 45- nm RFCMOS process, which enables a monolithic implementation of a 2TX, 4RX system with built-in PLL and A2D converters. It integrates the DSP subsystem, which contains high-performance DSP for the Radar Signal processing. The device includes an ARM processor subsystem, which is responsible for radio configuration, control, and calibration. Simple programming model changes can enable a wide variety of sensor implementation (Short, Mid, Long) with the possibility of dynamic reconfiguration for implementing a multimode sensor. Additionally, the device is provided as a complete platform solution including reference hardware design, software drivers, sample configurations, API guide, and user documentation.

### LiDAR Sensor (nanoLiDAR)

LiDAR is also known as Light Detection and Ranging. It is a technology which detects objects on the surface, as well as their size and exact disposition. LiDAR appeared on the market after RADAR and SONAR, and it uses laser light pulses to scan the environment, as opposed to radio or sound waves. LiDAR is a remote sensing technology and a method for measuring distances (ranging) by illuminating the target with laser light (uses the pulses) and measuring the reflection with a sensor; differences in laser return times and wavelengths can then be used to make digital 3-D representations of the target (e.g, the swimmer). LiDAR works in a similar way to RADAR and SONAR using light waves from a laser (generating light pulses), instead of radio or sound waves.

A LiDAR system calculates how long it takes for the light to hit an object or surface and reflect back to the scanner. The distance is then calculated using the velocity of light. These are known as 'Time of Flight' measurements. Depending on the sensor used, LiDAR units can fire hundreds of thousands to millions of pulses per second. Each of these measurements, or returns, can then be processed into a 3D visualization known as a 'point cloud'. **FIG. 10** illustrates an example of a 3D visualization **1000,** in accordance with some embodiments.

LiDAR algorithm functioning:
- Laser signals are emitted;

- Laser signals reach an obstacle;
- Signal reflects from the obstacle;
- Signal returns to the receiver; and then
- A laser pulse is registered.

The device emits laser pulses which move outwards in various directions until the signals reach an object, and then reflect and return to the receiver. In fact, this is the same principle SONAR uses, except SONAR emits sound waves. With LiDAR, the light is 1,000,000 times faster than the sound. An example is during a storm with lighting - at first, the lightning is seen, and the sound is heard a couple seconds later. Such high speed allows the device to receive data from a tremendous number of laser pulses every second. It means information is updated more frequently and, as a result, more precise data is received.

An inner processor saves each reflection point of a laser and generates a 3D image of the environment. Such working principles allow us to create precise maps using a LiDAR installed on board a plane, for example. Furthermore, the same processor can calculate the distance between a detected object and a LiDAR receiver by using a simple school formula where laser pulse speed and reflection time are known, and then the distance a laser pulse travels along may be determined.

LiDAR has shorter wavelengths than RADAR, which allows for detection of small objects. A LiDAR can build an exact 3D monochromatic image of an object.

The principle of LiDAR is simple. The optical measuring technology is applied in two ways: as time-of-flight LiDAR, to measure the distance to an object, and as Doppler LiDAR, to measure the speed of objects. A transmitter transmits pulses of light. A receiver measures the time between transmitting and receiving the reflected photons using the formula: $d = \left(c\times t\right) / \left(2\times n\right)$ (51) where **d** is the distance in metres, **c** is the speed of light in a vacuum, **t** is the duration in seconds and **n** is the refractive index of the air.

A refractive index, also called index of refraction, is a measure of the bending of a ray. In the swim in place pool, a laser scanning system may be used to survey the swimmer (or object) creating a digital three-dimensional (3D) model of the swimmer (or object), and using it into an artificial intelligence (AI) algorithm capable to emulate the real swimmer (or object) behaviour and predicting the movement and velocity: $V = \left(T1/T2-1\right) \times c / n$ (52) where **T** represents the wave period.

**FIG. 6G** illustrates, in a schematic diagram, an example of LiDAR sensor configurations of a swim spa system **600g,** in accordance with some embodiments As shown in **FIG. 6G****,** the functional difference between LiDAR and other type of ToF is that LiDAR uses pulsed lasers to build a point cloud, which is then used to construct a 3D map or image. ToF applications create "depth maps" based on light detection, usually through a standard RGB camera. The advantage of ToF over LiDAR is that ToF requires less specialized and sophisticated equipment so that it can be integrated in smaller and less expensive devices. The main advantage of LiDAR is that a computer can ease read a point cloud compared to a depth map. Both ToF and LiDAR can work together with other sensors (presented in **FIG. 6A** to **FIG. 6F**) on the swimming autonomous mode. LiDAR is faster and more accurate than Time of Flight and does not have difficulties understanding large, low-texture surfaces (i.e., large white surfaces).

### Swim in Place Pool Tank

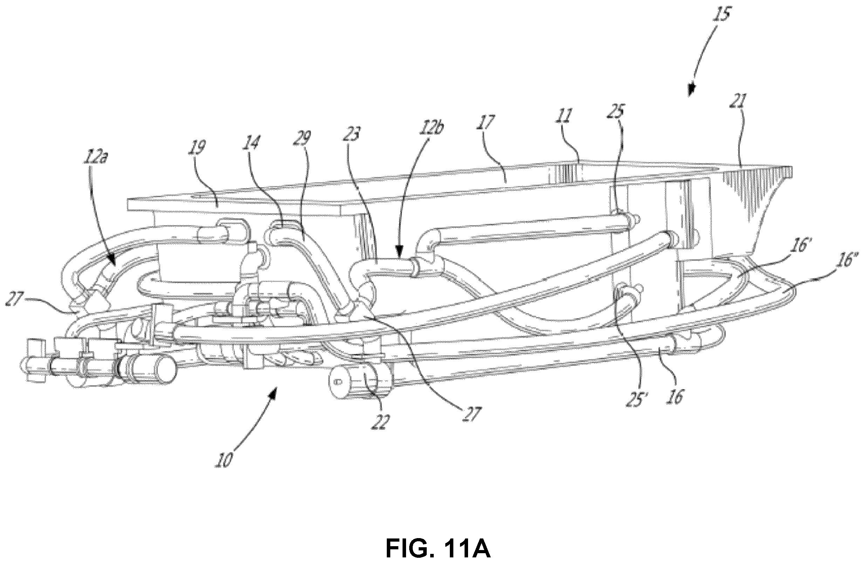

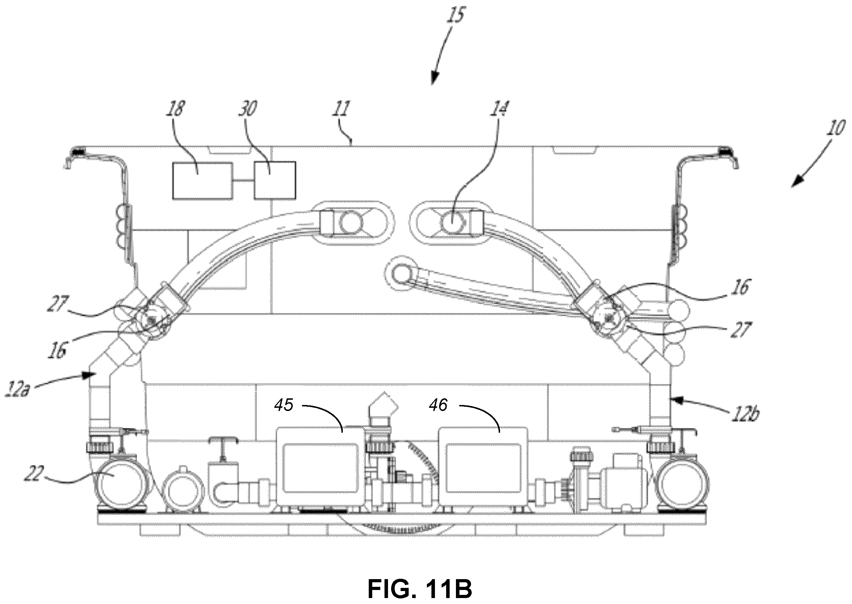

The following embodiment does not form part of the claimed invention but is an example useful for understanding the invention. **FIGs. 11A** and **11B** show an example embodiment of a swim in place pool **15** with an automatic water diversion system **10.** The swim in place pool **15** has a basin **17** having a top surface **11.** In this embodiment, the automatic water diversion system **10** includes a pair of water circulation subsystems **12a, 12b.** One water circulation subsystem **12a, 12b** is provided on each side of the swim in place pool. In this embodiment, the water circulation subsystem **12a, 12b** both have the same elements, and so only one will be described in detail. The water circulation subsystem **12b** has at least one circulation outlet **14** that opens into the swim in place pool **15,** and more specifically at the front end **19** of the basin. The water circulation subsystem **12b** has its own dedicated recirculation pump **22** adapted to pump water into the inlet (not shown) of a primary conduit **16** from the rear end **21** of the basin **17.** In this embodiment, the primary conduit **16** has two branches **16', 16"** manifolding two respective sub-inlets into a common conduit leading to the recirculation pump **22.** The water circulation subsystem **12b** further has a diverter conduit **23** leading to a bypass outlet **25, 25'** in the basin. In this embodiment, the diverter conduit also branches off and has to two bypass sub-outlets **25, 25'.** The water circulation subsystem **12b** has a diverter valve **27** connecting the primary conduit **16** to both the diverter conduit **23** and a circulation conduit **29** leading to the circulation inlet **14.**

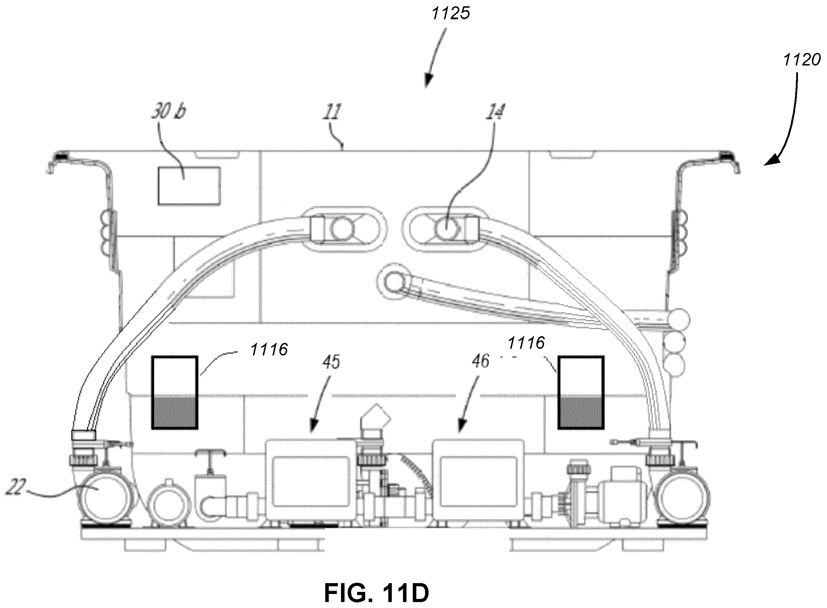

Operation of the diverter valve **27** allows to adjust the relative flow rate of water which is diverted from the circulation conduit **29** to the diverter conduit **23,** so as to adjust the speed of the water flow in the basin. The circulation outlets **14** at the front end **19,** and the inlets at the rear end **21,** are directed substantially towards one another in the longitudinal orientation to cooperate in imparting the speed of the water flow in the basin **17.** Contrary to the circulation outlet **14** which is aimed longitudinally, the bypass outlet **25, 25'** is aimed laterally and does not contribute significantly to the speed of the water flow in the basin **17.** The diverter valves **27** have valve actuators **16** which are electronically controlled by a controller **18,** such as shown in **FIG. 11B****.** A user interface **30** is provided in a manner to be accessible by a swimming user in the basin **17,** such as on a top portion **11** of the basin above the water line, for instance. Accordingly, the controller **18** can adjust the speed of the water in the basin, based on the swimming user's input received via the user interface **30,** by controlling the valve actuators **16.** In this embodiment, the pumps **22** are positioned outside and remotely from the top surface **11** of the swim in place pool **15.** The pumps **22** are connected between the inlet and the outlets **14, 25** by the conduits **16, 29, 23, 25.** The circulation outlets **14** can be wide stream jets and the bypass outlets **25, 25'** can be located at an intermediary location along the side of the swim in place pool, on opposite lateral sides, and designed so as to engage the user's thigh. The valve actuators **16** are distant from the top surface **11** and are not directly accessible by the user. The controller **18,** via the user interface **30** and valve actuators **16,** allows for incremental adjustments of water diversion between the circulation conduit **29** and the diversion conduit **23.** For instance, the user interface may include a keypad including a `faster' key, or 'up' key **32,** and a `slower' key, or 'down' key **34,** for instance, that may be engaged by the user to increase or decrease the speed of the water in the basin, respectively, such as shown in **FIG. 11D****.**

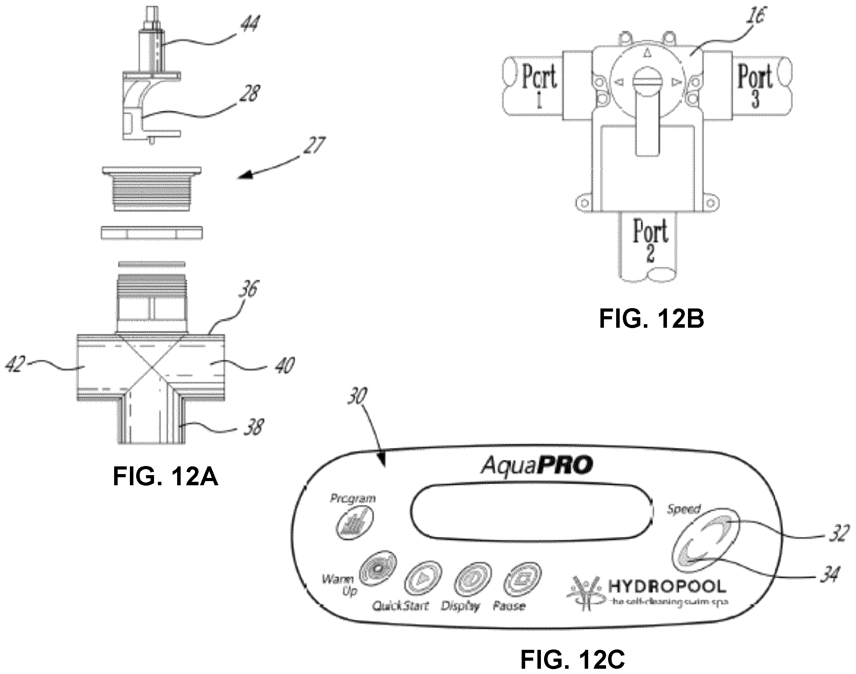

An example of a diverter valve **27** is shown in **FIG. 12A****.** The diverter valve **27** has a fixed diverter body **36** having an inlet **38** and two outlets **40, 42,** and a valve member **28** rotatably mounted in the diverter body **36.** The valve member **28** has an upper cam and a lower cam, and its rotation controls the relative amount of flow rate being directed to the two outlets **40, 42.** A stem **44** protrudes from the valve member **28.** The valve actuator **16** is mounted to the stem **44** to control the rotation.

An example of a valve actuator **16** is shown in **FIG. 12B****.**

In the example embodiment, the operation of the automatic water diversion system **10** for a swim in place pool **15** includes activating the pumps **22** of the water circulating subsystems **12a, 12b** in a synchronized manner using the controller **18.** The user may then adjust the automatic water diversion system **10** and specifically the flow rate of water through the circulation outlets **14.** This can be achieved by the user engaging a keypad forming part of the user interface **30** (see **FIG. 12C**), and located remotely from the electronic adjustable valve actuators **16,** and pressing an up **32** or a down **34** arrow, for instance. Depressing the keypad results in the electronic adjustable valve actuators **16** rotating the valve members **28** in accordance with the user's input.

The user has the ability to remotely adjust the flow rate through the outlets **14** by just pressing a keypad, which can conveniently be done while he/she is engaged in the swimming activity. The user has to exert very little pressure in pushing the keypad button to overcome the significant force being exerted on the diverters **18** when the swim in place pool pumps **22** are engaged and the water is being pumped through the water circulating system **12.** Furthermore the automatic water diversion system **10** for a swim in place pool **15** can allow for 100 percent diversion of the water from the midpoint jet outlet **25, 25'** to the wide stream jet outlet **14.** This may be conveniently accomplished without the user having to exert any significant effort or pressure. The ability to divert such dramatically large volumes of water allows for the water flow to be completely customized by the user to accommodate different levels and skills of swimmers.

The following embodiment does not form part of the claimed invention but is an example useful for understanding the invention. Other variations and modifications are possible. For instance, in the embodiment illustrated, it was preferred to use two independent pumps and each associated to a corresponding one of two independent circulation subsystems. In alternate embodiments, it would be possible to use only a single circulation subsystem and only a single pump, for instance. Alternately, it would be possible to use more than two circulation subsystems. Each circulation subsystem could use more than one pump, could have more than one inlet, more than one circulation outlet, and/or more than one diversion outlet, for instance, especially in a context where it may be advantageous to merge and re-separate flow, such as to uniformize flow rate for instance.

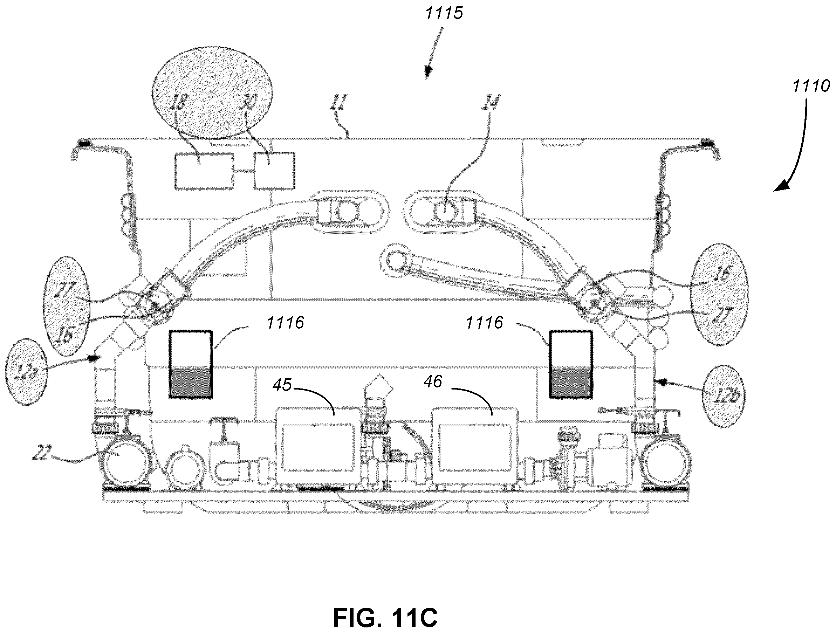

**FIG. 11C** illustrates, in a front elevation view, another example of a swim in place pool **1115** with an automatic water diversion system **1110,** in accordance with some embodiments. This example shows a classic solution with a classic induction motor for centrifugal pumps classic closed loop control (with diverter/three-way valves **27** with actuator **16** controlled by an electronic controller interface **18.** This electronic controller interface **18** is in communication with the master controller **45** (which is controlling the slave controller **46** as well). In the master controller **45** resides the software and the ANN algorithms (high level) that control all swim spa elements. **FIG. 11C** illustrates the transition from a classic solution to a new concept of variable speed solution using a smart motor drive and new generation of electronic controls, the elements **12a, 12b, 17, 18, 27** and **30** may be replaced by the motor drive.

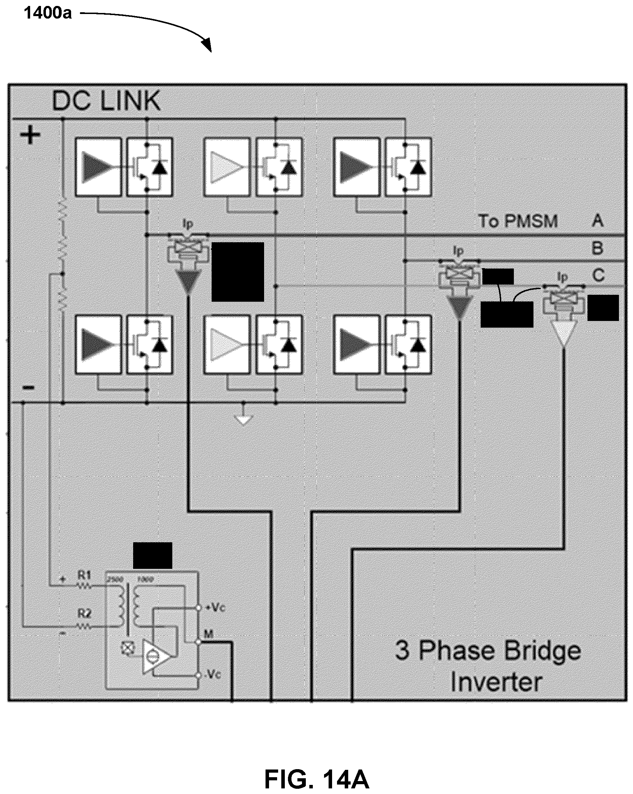

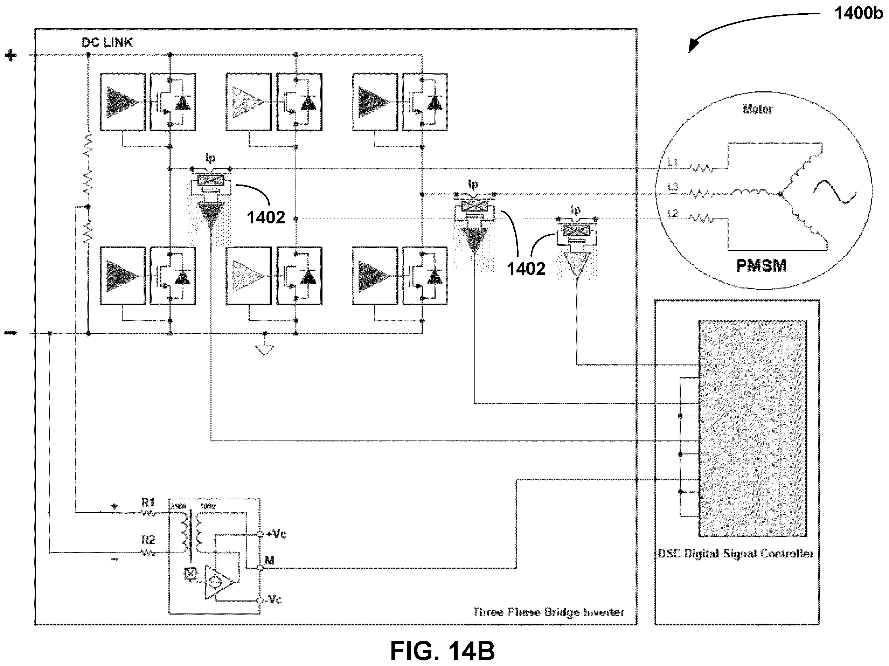

A motor drive **1116** may be used to control the speed of the motor and may comprise hardware and the software that controls the motor. In some embodiments, the motor drive **1116** is a smart device capable of controlling the motor speed, varying the frequency, and also controlling the applied voltage to maintain the optimum flux (magnetic field). The magnetising current in the stator depends on the integral of the voltage over time if the frequency decreases then the period, or length of the sine wave increases, leading to excessive magnetising current in the motor. Therefore, as the frequency is reduced, the voltage applied to the motor is also reduced in proportion. The AC supply may be converted into DC using a rectifier and then converted back to variable frequency supply using an inverter (shown in detail in **FIG.14A** and **FIG.14B**). The inverter is part of the drive (power board). The drive **1116** has also a control board having a main processor that controls the entire motor drive **1116.** In other words the motor drive **1116** may comprise elements shown in **FIG. 11B to FIG. 11C****,** **FIG. 27A** to **FIG. 27E****,** **FIG. 29A** to **FIG. 29D** or **FIG. 30A** to **FIG. 30C****.** In some embodiments, the controller interface **18** is a small smart controller interface that accommodates the secondary keypad **30,** the two valve actuators and it communicates with the master controller **45** and slave controller **46.**

The controller, or electronic control system, may be contained or associated with a housing structure adjacent the swim in place pool. In alternate embodiments, the controller can be embodied in various forms. For instance, the controller can alternately be embodied as an application stored in the memory of a smart phone, for instance. In the illustrated embodiment, the controller is housed in a waterproof housing made integral to the basin. Accordingly, as can be understood, the examples described above and illustrated are intended to be exemplary only. The scope is indicated by the appended claims.

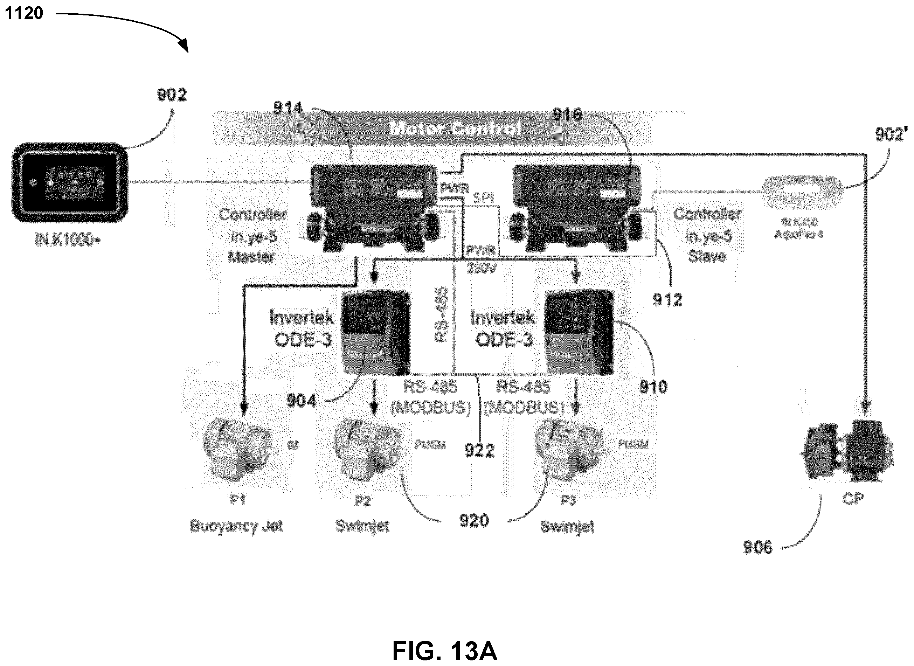

In some embodiments, the pumps can be variable speed pumps. The controller **18,** can be connected to control and operate the valve actuators **16** in a wired or wireless manner. Similarly, the controller **18** can be connected to the user interface **30** in a wired or wireless manner. A waterproof secondary user interface may be placed conveniently closer to the user. The secondary user interface (**30b in** **FIG. 11C****; 902'** in **FIG. 13A****)** can be connected to the slave controller **46** (**916** in **FIG. 13A**). The main user interface **18** (**902** in **FIG. 13A**) is connected to the master controller **45** (**914** in **FIG. 13A**) and typically a smart device more complex than **30b** (**902'**)**.**

**FIG. 11D** illustrates, in a front elevation view, another example of a swim in place pool **1125** with a variable speed pump (VSP) subsystem **1120,** in accordance with some embodiments. In this example, the user interface **30b** may comprise the hardware slave controller **46** in **FIG. 11D** (**916** in **FIG. 13A****)** having more functions and alternative meanings of the keys (buttons). The VSP subsystem **1120** eliminates the three-way valves **27,** the actuator **16,** and the diverting plumbing and the bypass outlets **25, 25'** (see **FIGs 11A** and **11B**). The user interface **30b** may be a dedicated device or an alternative device such a smart phone, a tablet or other suitable device that will have a specific software (i.e., App) and it is waterproof (i.e., IP67 or NEMA6P). All the replaced elements **45, 25', 16, 18, 27** (from **FIGs. 11A** and **11B**) are replaced by a motor drive **1116** having an internal schematic equivalent with the one presented below with reference to **FIG. 11B** and an adequate software based on Fuzzy/ Artificial Neural Network algorithms. The motor drive will feed the pumps motors; the motors could be induction motor (IM), brushless DC motor (BLDC), electronically commuted motor (ECM), permanent magnet synchronous motor (PMSM), - both versions: surface mounted magnets and interior mounted magnets or other type of electric motors.

In some embodiments, the swim spa **15, 1115, 1115'** may operate manually, using pre-set programming, and/or in an autonomous mode. Manually, an HMI may be used by a user to increase the speed of the water current in steps from zero to 10 (e.g., 100%), and the system may be overloaded at 12 (e.g., 120 %) if necessary. A pre-set program may operate the swim spa in a treadmill style. In the autonomous mode, the system learns the position of the swimmer and emulates a virtual digital swimmer with the same behaviour as the real one. Based on the adaptive predictive algorithm may be based on an Artificial Neural Network (ANN), the system after training is capable to read and control the swimmer behaviour.

In some embodiments, the neural network predictive controller that is implemented in the Neural Network software uses a neural network model of a nonlinear plant to predict future plant performance. The controller then calculates the control input (base on the swimmer position detected by the sensors) that will optimize plant performance over a specified future time horizon. The first step in model predictive control is to determine the neural network plant model (system identification). Next, the plant model is used by the controller to predict future performance (swimmer velocity and duration).

### VSP Subsystem 1120

In some embodiments, the VSP subsystem **1120** will work with any machine learning (ML) deep learning (DL) machine that is connected into the home network where the swim spa is connected and has a specific Application to access the swim spa ANN algorithm. Artificial neural networks (ANNs) were inspired by information processing and distributed communication nodes in biological systems. ANNs have various differences from biological brains. Specifically, neural networks tend to be static and symbolic, while the biological brain of most living organisms is dynamic (plastic) and analog. The adjective "deep" in deep learning comes from the use of multiple layers in the network. Early work showed that a linear perceptron cannot be a universal classifier, and then that a network with a no polynomial activation function with one hidden layer of unbounded width can on the other hand so be.

**FIG. 13A** illustrates, in a component diagram, an example of a VSP subsystem **1120,** in accordance with some embodiments. In some embodiments, a swim spa controller has a better microcontroller (i.e. ARM Cortex-M family), more memory and a fast RS-485 serial bus, all this to support a main AI algorithm, a mathematical model, and a software and user-friendly end user interface (swimmer experience) developed using the assembly language of the microcontroller (and Macros).

In some embodiments, a VSP subsystem **1120** may comprise a secondary keypad controller **902',** a second motor drive **904,** a second PMSM pump **906,** a third PMSM pump **908,** a third motor drive **910,** an SPI bus **912,** a master electronic controller **914,** a slave electronic controller **916,** an inlet **918** with water flow set to approximately 400 GPM into a convergent divergent swim jet **920,** a wired RS-485 **922** from the master electronic controller **914** to the third motor drive **910,** a wired phase power **924** from the master electronic controller **914** to the third motor drive **910,** a three phase power wire **926** from the third motor drive **910** to the third PMSM pump **908,** an inlet where suction causes water to flow into the third PMSM pump **908,** an outlet where the water is discharged outwards to the swim jet **920,** and a three-way valve, in accordance with some embodiments. It should be understood that similar connections are present for other PMSM pumps and motor drives.

### Closed-Loop Vector Control

When an encoder is used in conjunction with a vector drive to provide shaft position feedback, the system is referred to as closed-loop. Information regarding the shaft position allows the controller to determine if the torque output is incorrect. That is, if the shaft overshoots the desired position, then too much torque is being applied, and vice-versa. Based on shaft position, the voltage can be adjusted to increase or decrease the torque, regardless of motor speed.

### Open-Loop Vector Control

Vector control without an encoder, often referred to as open-loop vector control, avoids the need for a feedback device by using a mathematical model of the motor operating parameters. Rather than using a shaft encoder to monitor position, the controller monitors the current and voltage from the motor. It compares these values to the model, and then makes error corrections to the supplied current, which in turn, adjusts the torque. Thus, open-loop vector control requires a very accurate motor model.

It should be noted that in this context, "open-loop" is an inappropriate name. The system is actually closed-loop, but the feedback information comes from within the VFD (Variable Frequency Drive) module itself instead of from an external encoder (i.e., Position and speed estimator using the iα, iβ, Vα,Vβ and Park-Clarke transformations). Therefore, open-loop vector drives are also referred to as "sensorless" vector drives.

Open-loop vector control provides tighter speed control, higher starting torque, and higher low-speed torque than simple V/Hz scalar control, it allows up to 200 percent of the motor's rated torque to be produced at 0 RPM (Revolutions Per Minute).

### Permanent Magnet Synchronous Machine (PMSM)

The environmental demands and technological advancement continue to drive the need for advanced motor control techniques that produce energy efficient industrial products using electrical motors and generally electrical devices. The implementation of advanced, cost-effective motor control algorithms is now a reality thanks to the new generation of Digital Signal Controllers (DSCs) base on DSP (Digital Signal Processors).

The commercial products require fast response for speed changes in the motor for example an electrical car. Advanced motor control algorithms are needed to produce faster, secure and quieter units that are more energy efficient and environmentally friendly in all aspects. Field Oriented Control (FOC) has emerged as the leading method to achieve these demands.

DSCs are suitable for motor control devices because they incorporate peripherals that are ideally suited for motor control, such as:
- Pulse-Width Modulation (PWM)
- Analog-to-Digital Converters (ADCs)
- Quadrature Encoder Interface (QEI)
- Power Factor Correction (PFC)
- Digital Filters (DF)
- Over Voltage and Current protection (VIP)
- Communication Interfaces (CI)

When performing controller routines and implementing digital filters, DSCs enable designers to optimize code because MAC instructions and fractional operation scan be executed in a single cycle. Also, for operations that require saturation capabilities, the DSCs help avoid overflows by offering hardware saturation protection. DSCs need fast and flexible analog-to-digital (A/D) conversion for current sensing-a crucial function in motor control. The DSCs feature ADCs that can convert input samples at Mega samples rates, and handle up to multiple inputs simultaneously. Multiple trigger options on the ADCs enable use of inexpensive current sense resistors to measure winding currents. For example, the ability to trigger A/D conversions with the PWM module allows inexpensive current sensing circuitry to sense inputs at specific times (switching transistors allow current to flow through sense resistors).

The DSCs Motor Control is specifically designed to control the most popular types of motors, including:
- AC Induction Motors (ACIM)
- Brushed DC Motors (BDC)
- Brushless DC Motors (BLDC)
- Permanent Magnet Synchronous Motors (PMSM)-SPM and IPM
- Synchronous Reluctance Motors (SynRM)
- Line Start PM Motor (LSPM)

Permanent Magnet (PM) motors have higher efficiency than induction motors because there are no copper losses of the rotor. But widespread use of the PM motors has been discouraged by price and requirement of a speed encoder. Low-cost high-performance CPUs and establishment of the speed sensor less control theory, demand for permanent magnet motors is increasing because of their high efficiency, wide driving range, high output torque per unit volume, lighter, compact, high power density, reliability, long life etc. The materials used for making permanent magnets are Alnico (AINi), Samarium Cobalt, Neodymium Iron Boron (NdFeB), ferrites etc.

### PMSM Modeling

The permanent magnet synchronous motor consists of three phase stator similar to that of an induction machine and a rotor with permanent magnets. The machine characteristics depend on the type of the magnets used and the way they are located in the rotor. According to the type of rotor construction PMSM are classified as:
1) Surface mounted PMSM (Projecting type and Inset type)
2) Interior magnet PMSM

The surface mounted PMSM is the simplest and widely used configuration. As the relative permeability of the permanent magnet material is almost equal to air, the surface mount PMSM is almost similar to a uniform air gap machine. For interior PMSM the permanent magnets are kept inside the rotor structure and therefore the air gap is not uniform. The control is very similar to that of the vector control of induction machine. Only difference is that the position of rotating reference frame can be directly sensed unlike that of the induction machine. The main features of closed loop control can be summarized as follows:
1) Torque control requires to be controlled.
2) Field normally kept at zero for minimum stator current operation.
3) For rotor field orientation, the instantaneous position of rotor is required. This can be done by using speed sensor or position estimation technique in sensor less control.
4) Using the rotor position the sensed stator current can be transformed to d-q axis currents.

The assumptions made in the modeling of PMSM are:
1) Magnetic saturation is neglected
2) The induced EMF is sinusoidal
3) All the losses are negligible

PMSM motor is a standard SM with replaced common rotor field windings and pole structure with permanent magnets put the motor into the category of brushless motors; it is possible to build brushless permanent magnet motors with any even number of magnet poles. The use of magnets enables an efficient use of the radial space and replaces the rotor windings, therefore suppressing the rotor copper losses. Advanced magnet materials (rare earth elements base) permit a considerable reduction in motor dimensions while maintaining a very high power density, lighter and small dimensions.

Permanent Magnet Synchronous Motors (PMSM) are similar to Brushless DC motors (BLDC). PMSM are rotating electrical machines that have a wound stator and permanent magnet rotors that provide sinusoidal flux distribution in the air gap, making the BEMF inform a sinusoidal shape. The construction of the stator and rotor can provide lower rotor inertia and high power efficiency and reduce the motor size.

Depending on how magnets are attached to the rotor, PMSM motors can be classified into two types: surface PMSM (SPMSM or SPM) and interior PMSM (IPMSM or IPM). SPMSM mounts all magnet pieces on the surface, and IPMSM places magnets inside the rotor. PMSMs are classified based on the wave shape of their induced electromotive force (EMF), that is, sinusoidal and trapezoidal. The sinusoidal type is known as PMSM while the trapezoidal type is known as permanent magnet brushless DC (BLDC) machine.

Using mathematical equations, detail modelling of Permanent Magnet Synchronous Motor is discussed in this section. This section will discuss how field oriented control is achieved using D-Q transformation. This section will elaborate Park and Clarke transformation and will show how voltages and currents are converted from one reference frame to another. At the end PMSM an equivalent circuit is derived from Mathematical expressions.

PMSMs are rotating electrical machines that have stator phase windings and rotor permanent magnets; the air gap magnetic field is provided by these permanent magnets and hence they remain constant. While a conventional direct current (DC) motor commutates itself with the use of mechanical commutation, a PMSM needs an electronic commutation for the direction control of current through its windings. PMSM motors have the armature coils at the stator and they need to be commutated externally with the help of an external switching circuit and a three-phase inverter.

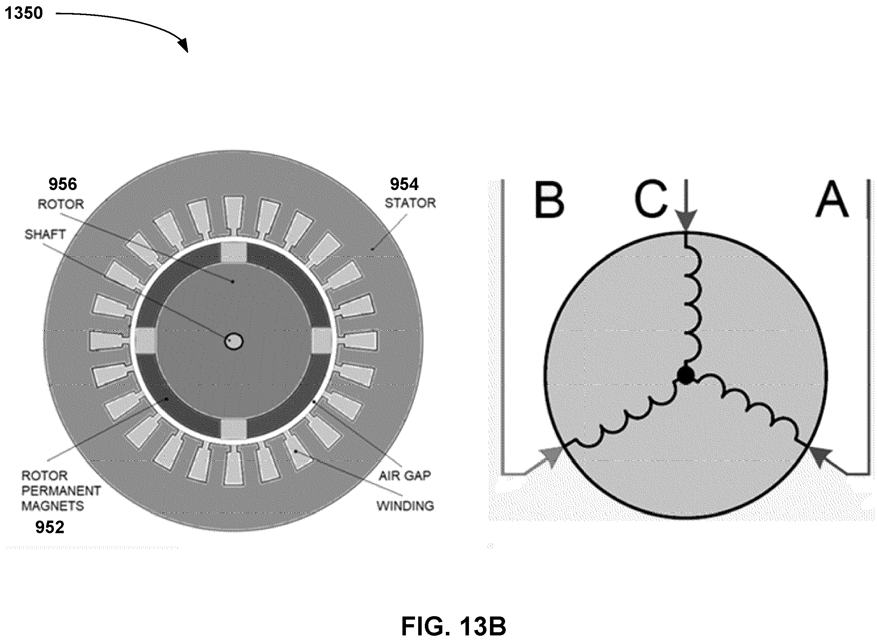

**FIG. 13B** shows an example of the PMSM **1350** in an axial view, in accordance with some embodiments.

The torque is produced due to the interaction of the two magnetic fields, which causes the motor to rotate, in permanent magnet motors, one of the magnetic fields is created by the permanent magnets **952** and the other is created by the stator **954** coils. The maximum torque is produced when the magnetic vector of the rotor **956** is at 90° to the magnetic vector of the stator **954.**

PMSMs are controlled by using the rotor position information to synchronize the machine line currents and their sinusoidal ***back electromotive force*** (back EMF). Using resolvers, encoders, or hall sensors depending on the level of accuracy and precision required by the application it can be obtained the rotor position. These position transducers have inherent disadvantages such as reduced reliability due to their sensitivity to vibration, high temperature, electromagnetic noise, increased costs, space, labour and weight. For these reasons, the sensorless control of PMSM has become increasingly attractive.

In sensorless control of a PMSM, the rotor position can be estimated by the back EMF of the motor. The advantage of such an approach is the greater flexibility attained to tune the estimator and the PMSM speed control system.

In some embodiments, sensors to measure the temperature and humidity of the air and water may be included. Such measurements can affect the viscosity of the water or air that affects the swimmer's performance. Different temperature and humidity settings may require the water to be pumped at different RPMs in order to maintain a swimmer's location at a particular speed of the swimmer.

**FIG. 14A** shows an example of a three phase bridge inverter **1400a,** in accordance with some embodiments.

**FIG. 14B** shows an example of an isolated phase current sense reference design with Hall effect sensors **1400b,** in accordance with some embodiments.

In some embodiments, a hall effect sensor **1402** may be included to measure the currents used in a three phase transformation (e.g., Clark transformation, Park transformation) to determine a current amperage and current voltage used by a motor. These values may be used to determine if a change in motor RPM is required based on a current position of the object (or swimmer).

### Sensorless Field Oriented Control (FOC)

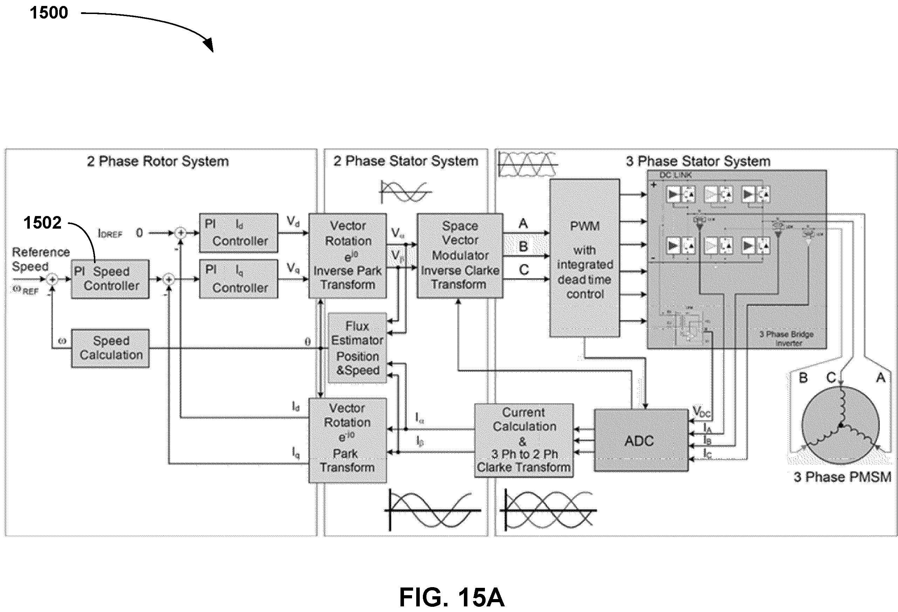

**FIG. 15A** illustrates, in a block diagram, an example of a sensorless FOC algorithm **1100,** in accordance with some embodiments. The sensorless FOC algorithm **1500A** includes the following FOC blocks: Current Measurement, Clarke Transformation, Inverse Clarke Transformation, Park Transformation, Inverse Park Transformation, Space Vector Pulse Width Modulation, PWM Generation, Angle Calculation, Speed Calculation, Open Loop Mode, and Ramp Function.

The model used for vector control design can be understood by using space vector theory. The 3-phase motor quantities (such as voltages, currents, magnetic flux, etc.) are expressed in terms of complex space vectors. Such a model is valid for any instantaneous variation of voltage and current and adequately describes the performance of the machine under both steady-state and transient operation. The complex space vectors can be described using only two orthogonal axes. The motor can be considered a 2-phase machine. Using a 2-phase motor model reduces the number of equations and simplifies the control design.

Three phase motors have three windings distributed 120 degrees phase apart. In the stationary reference frame three phases a, b, c are at fixed angles however they have a time varying amplitude. Differential coefficient associated with these vectors is time varying when the system is rotating. Since fluxes, currents induced voltages and flux linkages are always changing it becomes challenging to model the system mathematically. For simplification of this complex analysis, a mathematical transformation is carried out to solve equations involving variables with respect to a common reference frame. In this thesis, Park and Clarke transformation is discussed.

In a permanent magnet synchronous motor vector control scheme, Clarke and Park transformation are mainly used. This section will discuss Clarke, Inverse Clarke, Park and Inverse Park transformation. **Table 1** shows three phase reference quantities for Park and Clarke transformation:

**Table 1: Phase Reference Quantities for Park and Clarke Transformation**

| | |
|---|---|
| Va, Vb, Vc, Ia, Ib, Ic | Three phase values |
| *Vα*, *Vβ, Iα, Iβ* | Orthogonal stationary reference frame values |
| *Vq, Vd, Iq, Id* | Rotating reference frame values |
| **Θ** | Rotor flux position |

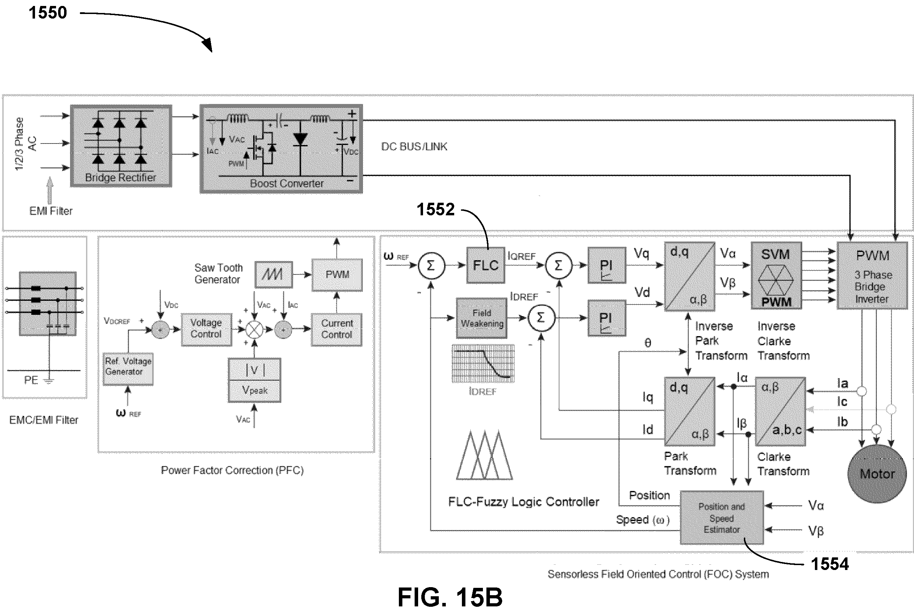

**FIG. 15B** illustrates, in a schematic diagram, an example of a sensorless FOC with fuzzy I_{Q REF} controller and position speed estimator for one motor **1550,** in accordance with some embodiments. In some embodiments, an FLC **1552** may be used in place of PI speed controller **1502.**

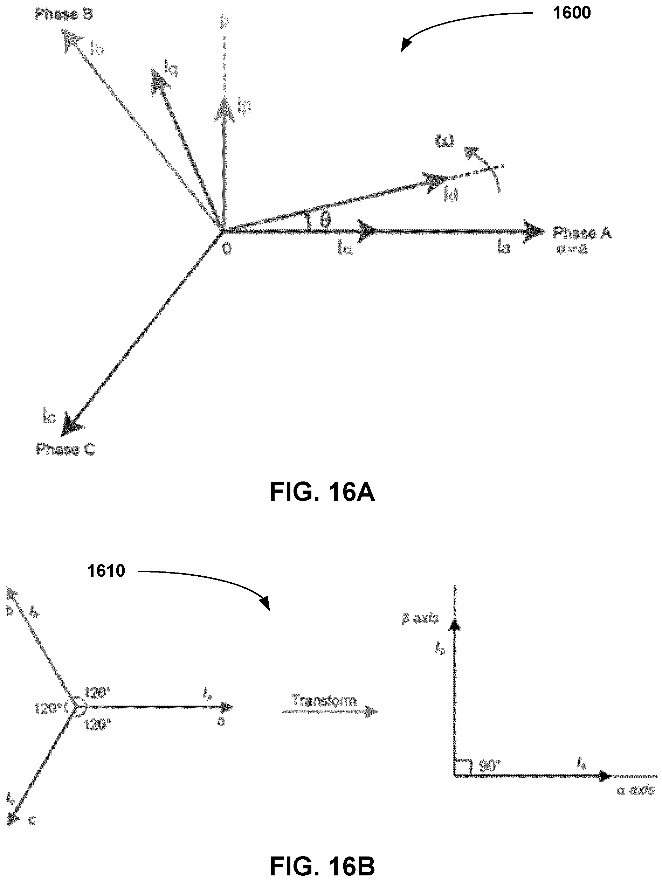

**FIG. 16A** illustrates, a vector representation **1600** of different reference frames, in accordance with some embodiments. Three phase values include *Va, Vb, Vc, Ia*, *Ib, Ic.* Orthogonal stationary reference frame values include *Vα, Vβ, Iα, Iβ.* Rotating reference frame values include *Vq, Vd, Iq, Id.* **θ** is the rotor flux position.

**FIG. 16B** illustrates an example of a Clarke transformation **1610,** in accordance with some embodiments. In this transformation, three phase quantities in a three phase reference frames are transformed into the two-phase quantities of an orthogonal stationary reference frame: $Iα = 2 / 3 \left(Ia\right) - 1 / 3 \left(Ib-Ic\right)$ (1) $Iβ = 2 / √ 3 \left(Ib-Ic\right)$ (2)

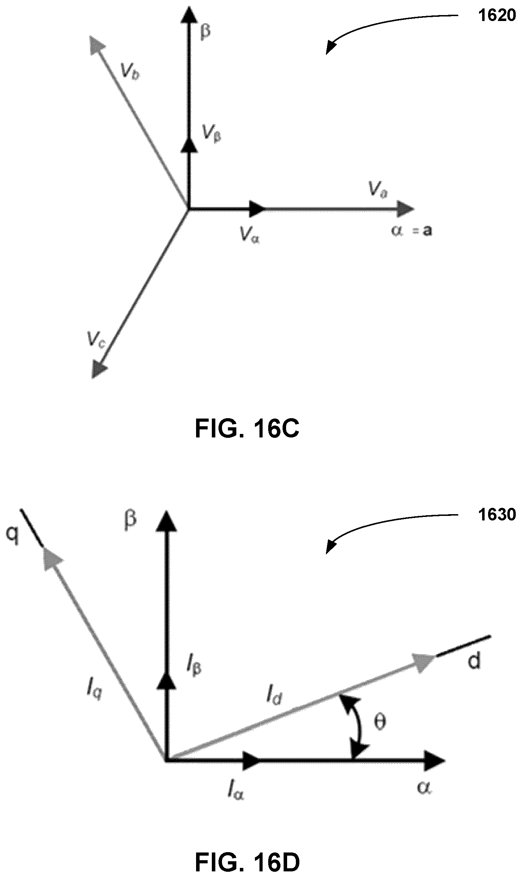

**FIG. 16C** illustrates an example of an inverse Clarke transformation **1620,** in accordance with some embodiments. In this transformation, two-axis quantities of an orthogonal reference frame are transformed into three-phase quantities of a stationary reference frame: $Va = Vα$ (3) $Vb = \left(-Vα+√3∗Vβ\right) / 2$ (4) $Vc = \left(-Vα-√3∗Vβ\right) / 2$ (5)

**FIG. 16D** illustrates an example of a Park transformation **1630,** in accordance with some embodiments. In this transformation, two axis quantities of an orthogonal reference frame are transformed into two-axis quantities of a rotating frame quantities: $Id = Iα ∗ cosθ + Iβ ∗ sinθ$ (6) $Iq = Iβ ∗ cosθ - Iα ∗ sinθ$ (7)

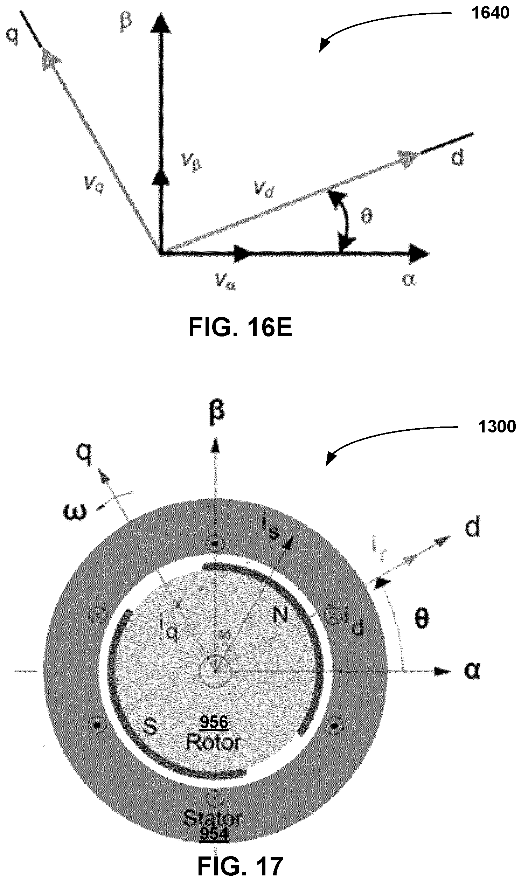

**FIG. 16E** illustrates an example of an inverse Park transformation **1640,** in accordance with some embodiments. In this transformation, two-axis quantities in a rotating reference frame are transformed into two-axis quantities of an orthogonal stationary reference frame: $Vα = Vd ∗ cosθ - Vq ∗ sinθ$ (8) $Vβ = Vq ∗ cosθ + Vd ∗ sinθ$ (9)

For modelling of PMSM drive systems, d-q to a-b-c block is used in case of FOC controlled scheme. And in case of PWM control scheme both a-b-c to d-q and d-q to a-b-c blocks are used. d-q to a-b-c transformation is achieved by reverse Park transformation and a-b-c to d-q is achieved by Park Transformation.

The following three equations are used to convert d-q to a-b-c: $Va = Vq ∗ cosθ - Vd ∗ sinθ$ (10) $Vb = Va ∗ cos \left(θ-2π/3\right) - Vd ∗ sin \left(θ-2π/3\right)$ (11) $Vc = Vq ∗ cos \left(θ+2π/3\right) - Vd ∗ sin \left(θ+2π/3\right)$ (12)

To convert a-b-c to d-q following equations are used: $Vq = 2 / 3 \left[Va∗cosθ+Vb∗cos\left(θ-2π/3\right)+Vc∗cos\left(θ+2π/3\right)\right]$ (13) $Vd = - 2 / 3 \left[Va∗sinθ+Vb∗sin\left(θ-2π/3\right)+Vc∗sin\left(θ+2π/3\right)\right]$ (14)

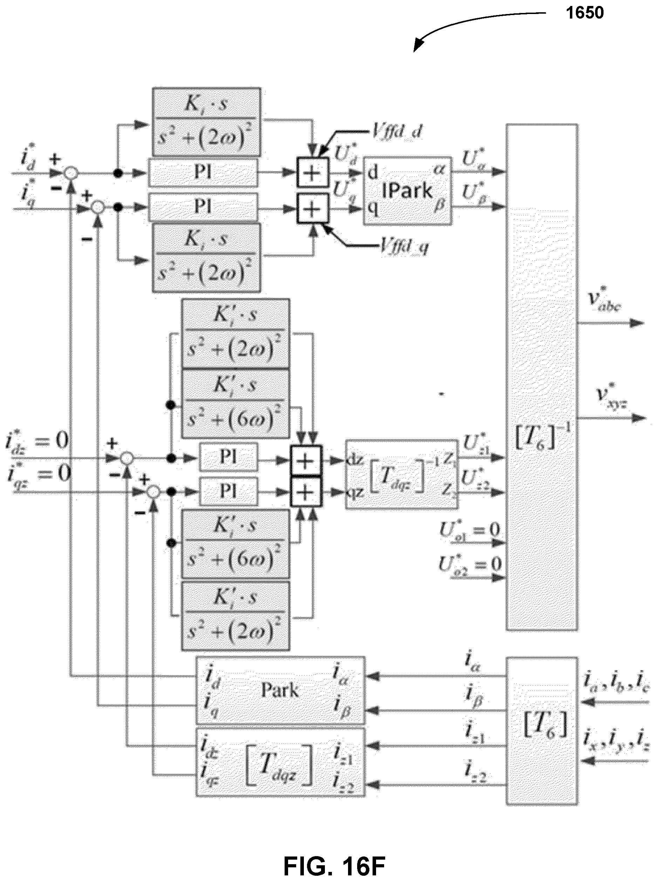

**FIG. 16F** illustrates, in a schematic diagram, an example of a method of controlling a VSP **1650,** in accordance with some embodiments.

**Synchronous motors** is called so because the speed of the rotor of this motor is the same as the rotating magnetic field. It is a fixed speed motor because it has only one speed, which is synchronous speed, or in other words, it is in synchronism with the supply frequency. Synchronous speed (Ns) is given by
Ns=120f/n_{P}=60f/P, P=nₚ/2, where f=frequency, P=Pair of poles, nₚ =Number of poles

For simulation of a PMSM drive system detailed modelling of the system is performed. **FIG. 17** illustrates an example of a PMSM motor axis **1700,** in accordance with some embodiments. The "q" axis is the axis of motor torque along which the stator flux must be developed. The "d" axis is the "direct" axis of the rotor flux. Theta is the electrical rotor angle. Alpha axis is aligned with the stator phase A. **α-β** are stator coordinates, **d-q** are motor coordinates, and **θ** is the rotor flux position. **FIG. 17** shows d-q model of a PM drive system developed on a rotor reference frame. The rotating d-axis is inclined at an angle of *θr* with a stator axis. The magnetomotive force (mmf) of stator is inclined at an angle *α* with respect to rotor axis. Also the rotor and stator mmf rotates at the equal speed.

The rotor **956** of the synchronous motor can be built using an electrically excited winding or alternatively a Permanent Magnet (PM). In the second case, the resulting motor is called Permanent Magnet Synchronous Motor (PMSM). A surface mounted (SM) Permanent Magnet Synchronous Motor with multiple-pole and 3-phase (possible single phase) has considered for applications. The flux in the machine is mainly set up by the permanent magnets in the rotor **956,** which ideally produce a sinusoidal distributed flux in the air gap. The rotor iron in cross section is approximately circular and the stator **954** inductance is low, as well as independent from the rotor position. For the SMPMSM (or SPM) the stator phase voltages and currents are ideally sinusoidal. The control becomes simple and the reluctance effect can be neglected. Field weakening is difficult due to the low stator inductance, and thus the operation above nominal speed becomes difficult.

To develop motor model, 3 different reference frames are defined, as follows: 3-phase stator frame (*a-b-c*), 2-phase stationary frame (*α-β*) and a 2-phase rotational frame (*d-q*). In order to have constant reference values for the currents, the control is performed in the rotor oriented coordinate system - (*d-q*), which is rotating synchronously with the rotor, while the coordinate system (*α- β*) is stationary. With quadrature current control, the current vector is always aligned with the *q*-axis. Only the fundamental of the flux and current distribution in the machine is considered. The equations of SMPMSM model in the rotational (*d-q*) reference frame are described by the following relations:

In some embodiments, the following assumptions may be made for the modelling of a PMSM on the rotor reference frame.
1. Induced EMF is sinusoidal in nature
2. Saturation is not considered
3. Field current dynamics is none
4. Eddy currents and the hysteresis losses are negligible

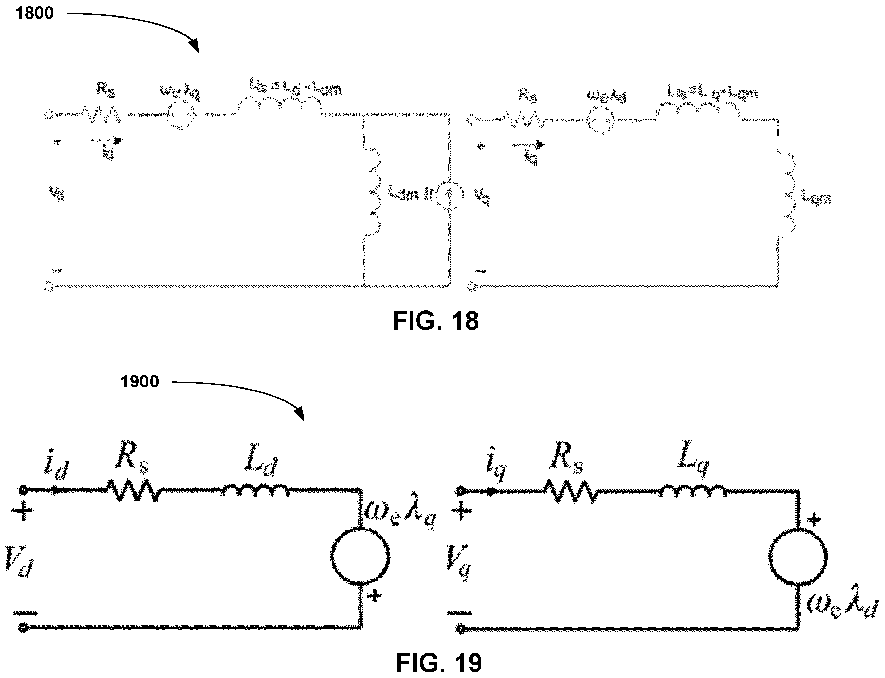

**FIG. 18** illustrates, in a circuit diagram, an example of an equivalent circuit **1800** of PMSM, in accordance with some embodiments.

**FIG. 19** illustrates, in a circuit diagram, an example of a PMSM *d-q*-axis dynamic equivalent circuit **1900,** in accordance with some embodiments. The circuit **1900** in this example is simplified. The voltage equations in d-q form are: $Vq = Rsiq + {ω}_{e} λd + ρλq$ (15) $Vd = Rsid - {ω}_{e} λq + ρλd$ (16)

Flux linkages of PMSM are: ${λ}_{q} = {L}_{q} {i}_{q}$ (17) ${λ}_{d} = {L}_{d} {i}_{d}$ (18)

Introducing equations (17) and (18) equations into equations (15) and (16) $Vq = Rsiq + ωe \left(Ldid+λf\right) + ρLqiq$ (19) $Vd = Rsid - ω e Lqiq + \left(Ldid+λf\right)$ (20)

Arranging in above equations in the form of matrix: $\left(\begin{matrix}{V}_{q} \\ {V}_{d}\end{matrix}\right) = \left(\begin{matrix}{R}_{s} + {ρL}_{q} & {ω}_{e} {L}_{d} \\ - {ω}_{e} {L}_{q} & {R}_{s} + {ρL}_{d}\end{matrix}\right) \left(\begin{matrix}{i}_{q} \\ {i}_{d}\end{matrix}\right) + \left(\begin{matrix}{ω}_{e} {λ}_{f} \\ {ρλ}_{f}\end{matrix}\right)$ (21)

The torque developed is: $Te = 3 / 2 P \left(λd iq-λq id\right)$ (22) where *λd, λq, Vd, Vq, id* and *iq* are the motor fluxes, voltages and currents in *d-q* coordinates; *ωe* is the electrical angular speed and Te is the electromagnetic torque. Regarding the motor parameters, *λf* is the flux of the permanent magnet, *P* is the number of pole pairs, *Rs* is the stator resistance and the stator inductance can be divided into two different components *Ld* and *Lq* due to the particularities of the PMSM.

The model is completed with the mechanical equation: $Te = TL + Bω + J \left(dω/dt\right)$ (23)

The mechanical rotor speed from equation (23) is: $ω = \int \left(\left(Te-TL-B ω\right)/J\right) dt$ (24) $ω = {ω}_{e} / P or {ω}_{e} = ωP$ (25) where *J* is the inertia of the motor and coupled load, *TL* is the load torque, *B* is the friction coefficient and ω is the mechanical angular speed (rotor speed). The torque relation Te becomes: $Te = 3 / 2 P \left({λ}_{f} iq-\left(Lq-Ld\right)iq id\right)$ (26) if the equations (3.17) and (3.18) are introduced in (3.22). Since the motor is with Surface Mounted PM (SMPMSM) the rotor has no saliency and the inductances can be considered to be equal *Lq= Ld* (except field weakening). The expression of torque under this circumstance is: $Te = 3 / 2 P \left({λ}_{f} iq\right) = {K}_{T} iq , \left({K}_{T}=3/2 P {λ}_{f}\right)$ (27)

Torque depends only by *iq* and *λ_{f}. K_{T}* represents the torque constant and *iq=iᵣₘₛ* is the root mean square value of the stator line current.

### Analysis and Control of PMSM Drive

In the control of SMPMSM the decoupling of the torque and flux magnitudes can be achieved, emulating a DC motor, by means of the FOC strategy. This is achieved by using the (*d-q*) transformation that separates the components *i_{d}* and *i_{q}* of the stator current responsible for flux and torque production, respectively. Due to the presence of the constant flux of the permanent magnet- *λ_{f}*, there is no need to generate flux by the *i_{d}* current. This component current must be kept at zero value, which in turns decreases the stator current and increases the efficiency of the motor drive (*i_{d} =*0)*.*

The *iq* quadrature current control gives the maximum torque per unit stator current. Since *K_{T}* is proportional to the magnet flux-linkage- *λ_{f}*, a change in the magnets remanence directly affects *K_{T}.* The motor torque is directly proportional to *iq* current component and it is used to produce the required torque. The PMSM has the fastest dynamic response and also operates in the most efficient state.

Due to the nature of the dynamics of the swim spa system **400,** several control algorithms could be applied. Each control scheme has its advantages and disadvantages. The control schemes used could be categorized as linear and non-linear control schemes.

### Proportional-integral-derivative (PID)

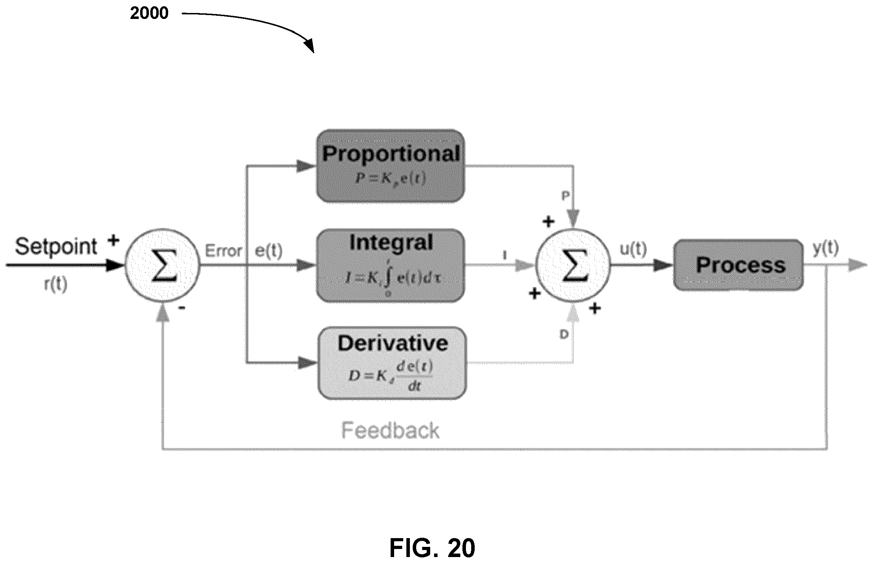

**FIG. 20** illustrates, in a block diagram, an example of a proportional-integral-derivative (PID) contoller **2000,** in accordance with some embodiments. The PID controller **2000** may be used in variable speed motors. The PID linear controller **2000** has the advantage that parameter gains are easy to adjust, is simple to design and has good robustness. However, some of the major challenges with the swim spa includes the non-linearity associated with the nature of mathematical model. Therefore, applying PID controller **2000** to the swim spa system **400** may limit the performance.

### Proportional Integral (PI)

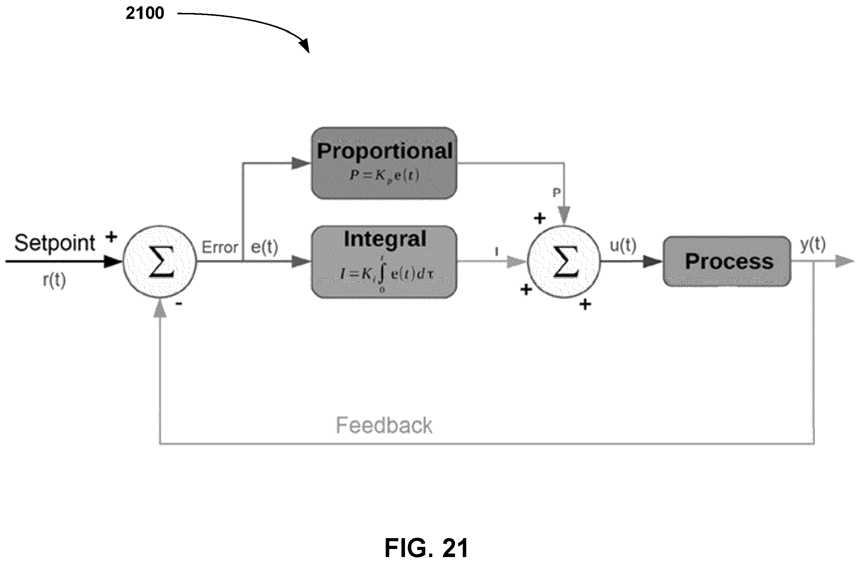

**FIG. 21** illustrates, in a block diagram, an example of a proportional integral (PI) controller **2100,** in accordance with some embodiments. In proportional integral mode, the controller **2100** may perform the following: Multiply the Error by the Proportional Gain (Kp) and Added to the Integral error multiplied by Ki, to get the controller output.

### Linear Quadratic Regulator/Gaussian LQR/G

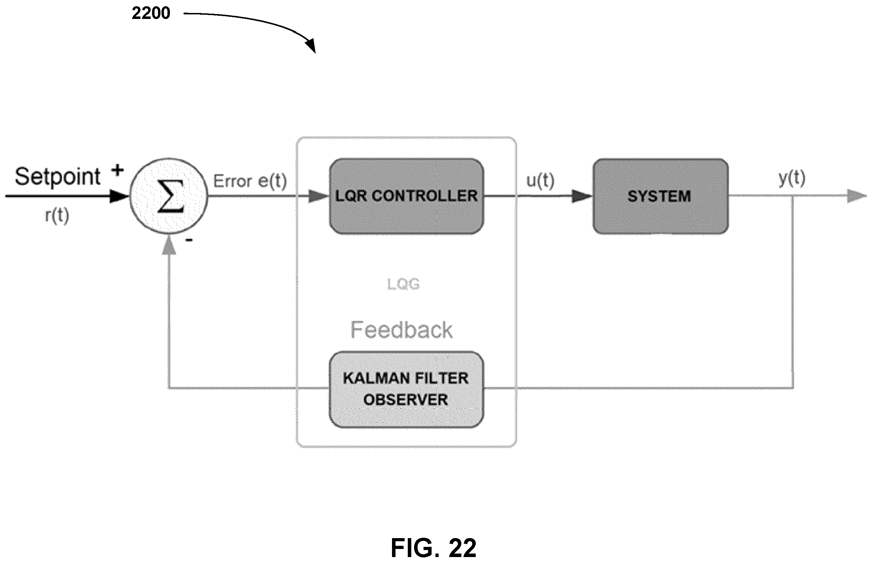

**FIG. 22** illustrates, in a block diagram, an example of a linear quadratic regulator (LQR) controller **2200,** in accordance with some embodiments. LQR is a control technique that can find the state feedback gain for a closed loop system. In LQR control the open-loop poles can be relocated to get a stable system with optimal control and minimum cost for given weighting matrices of the cost function. It is the optimal theory of pole placement method. To get the optimal gains, one may describe the optimal performance index and then solve algebraic Riccati equation: ${A}^{T} P + + PA - {PBR}^{- 1} {B}^{T} P + Q = 0$ (28) where P is the symmetric positive-definite matrix. The regulator gain K is given by, $K = {T}^{- 1} {\left(T\right)}^{- 1} RP = {R}^{- 1} {B}^{T} P$ (29) The cost function is, $J = \int x {\left(t\right)}^{T} Qx \left(t\right) + u {\left(t\right)}^{T} Ru \left(t\right) dt$ (30) where Q and R are the matrices, they are commonly tuned by trial and error method. The choice of the values of Q and R, the cost function is minimised.

The LQR optimal control algorithm operates a dynamic system by minimizing a suitable cost function.

In combination with a Linear Quadratic Estimator (LQE) and Kalman Filter, the LQR algorithm transforms into the Linear Quadratic Gaussian (LQG). This algorithm is for systems with Gaussian noise and incomplete state information.

### Sliding Mode Control (SMC)

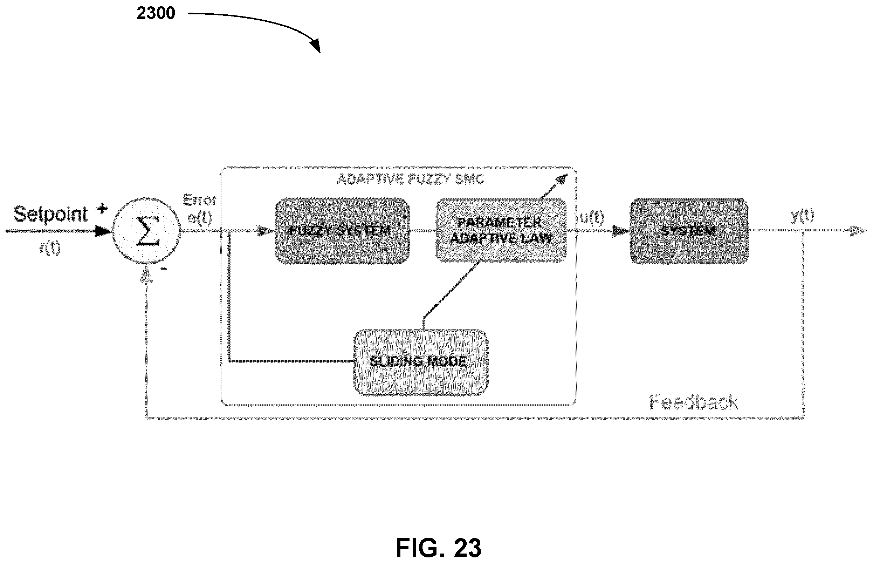

**FIG. 23** illustrates, in a block diagram, an example of an adaptive fuzzy sliding mode control (SMC) controller **2300,** in accordance with some embodiments. Sliding mode control (SMC) is a nonlinear control algorithm that works by applying a discontinuous control signal to the system to command it to slide along a prescribed path. Its main advantage is that it does not simplify the dynamics through linearization and has good tracking.

Adaptive fuzzy sliding mode control combines the advantages between adaptive fuzzy control and sliding mode control, which can not only adjust the adaptation law on line when uncertain function exists but also ensure the robustness of the considered nonlinear system.

### Back Stepping Control (Integrator)

Back stepping control is a recursive algorithm that breaks down the controller into steps and progressively stabilizes each subsystem. Its advantage is that the algorithm converges fast leading to less computational resources and it can handle disturbances well. The main limitation with the algorithm is that the robustness is not that good. Using Lyapunov stability theory could increase the stability of the system.

To increase robustness (to external disturbances) of the general back stepping algorithm, an integrator is added and the algorithm and it becomes Integrator back stepping control.

The integral approach was shown to eliminate the steady-state errors of the system, reduce response time and restrain overshoot of the control parameters.

### Adaptive Control Algorithms

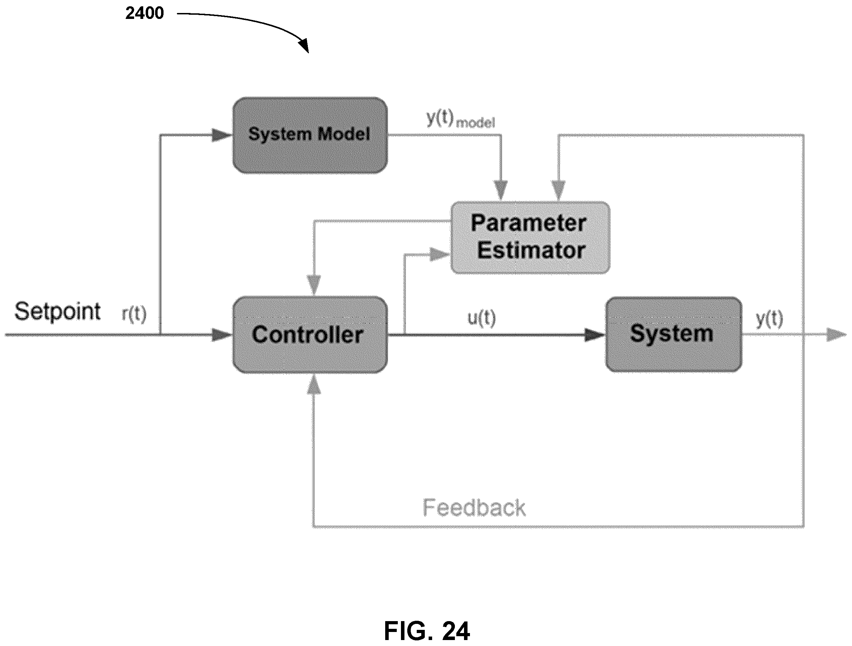

**FIG. 24** illustrates, in a block diagram, an example of an adaptive controller **2400** for motor drive, in accordance with some embodiments. Adaptive control algorithms are aimed at adapting to parameter changes in the system. The parameters are either uncertain or varying with time. In some embodiments, the adaptive controller **2400** may be an FLC or an ANN-based controller. Each are further described below.

### Robust Control Algorithms

Robust control algorithms are designed to deal with uncertainty in the system parameters or disturbances. This guarantees controller performance within acceptable disturbance ranges or unmodeled system parameters. A major limitation normally observed with robust controllers is poor tracking ability.

### Optimal Control Algorithms

Optimization algorithms are designed to minimize a variable and get the best cost function from a set of alternatives. A specialized case of optimization is known as convex optimization. This is a mathematical optimization technique that deals with minimizing a convex variable in a convex set. The common optimal algorithms include LQR, L₁, H₁ and Kalman filter. A limitation of optimization algorithms is generally their poor robustness.

### Feedback Linearization

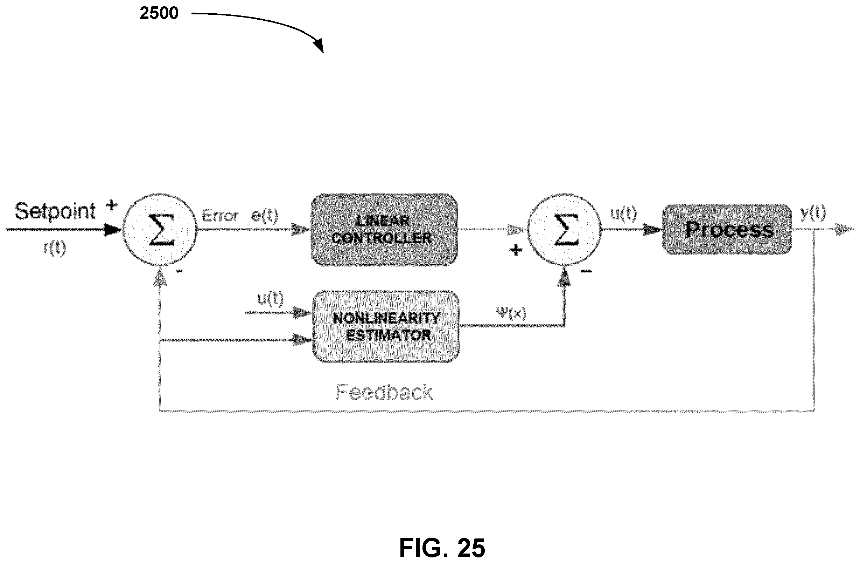

**FIG. 25** illustrates, in a schematic diagram, an example of the disturbance observer based control method **2500,** in accordance with some embodiments. Feedback linearization control algorithms transform a nonlinear system model into an equivalent linear system through a change of variables. Some limitation of feedback linearization is the loss of precision due to linearization and requiring an exact model for implementation. The feedback linearization method helps to convert many intractable nonlinear problems into simpler linear problems. The feedback linearization nonlinear control shows good tracking but poor disturbance rejection. If feedback linearization applied with another algorithm with less sensitivity to noise gives good performance.

### Intelligent Control (Fuzzy Logic and Artificial Neural Networks)

Intelligent control algorithms are biologically inspired and are used to control complex and nonlinear systems, examples include fuzzy logic, fuzzy PI logic, artificial neural networks, machine learning, genetic algorithm etc. This algorithm involves considerable uncertainties and mathematical complexity that requires high computational resources which creates limitations in the use of intelligent systems.

### Fuzzy Logic Controller (FLC)

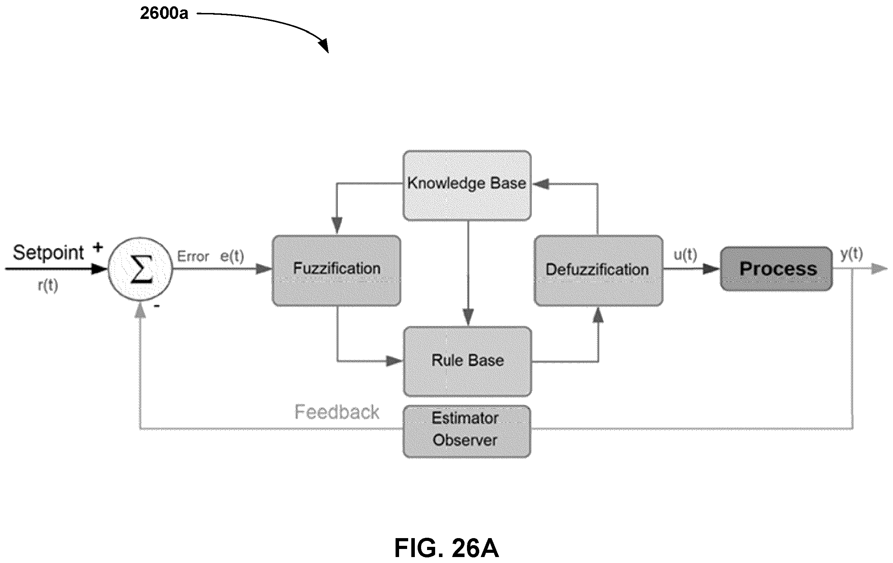

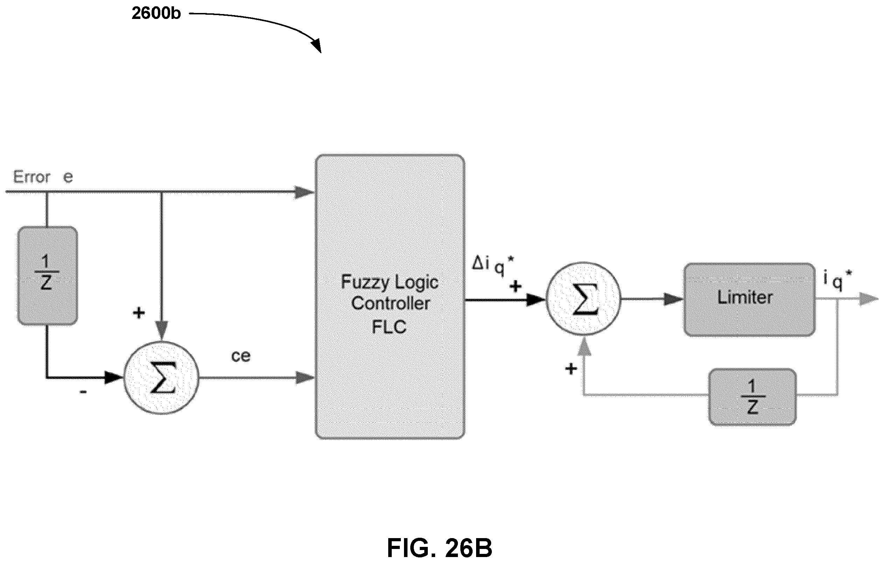

**FIG. 26A** illustrates, in a block diagram, an example of an application of an FLC **2600,** in accordance with some embodiments. An FLC **2600** may replace the PI controller **2100** used for error minimization in the conventional PI speed controller. The structure of the FL controller is shown in **FIGs. 26A** and **26B****.**

**FIG. 26B** illustrates, in a block diagram, an example of the FLC **2600** in more detail. The controller has two input variables namely the speed error e and the change of speed error ce. The controller output is the increment of current torque command (Δ i_{q}*) which is integrated to generate the current command (i_{q}*) = I_{QREF}. The error is given by the difference between the speed command (ω*) = ω_{REF} and the actual rotor speed (ω), while the change of error is given by the difference between the present error and the previous error. The input variables (e and ce) are normalised to derive normalised error (eₙ) and normalised change of error (ceₙ) signals. A fuzzifier (e.g., a singleton fuzzifier) is used at the front of the system to convert the crisp data values to fuzzy data. The corresponding control rules are evaluated, from membership functions and rule table, composed and finally defuzzified to derive the change of the current torque command (Δ i_{q}*).

e and ce were then calculated as in equation (31) and (32) for every sampling time: $e \left(k\right) = ω * \left(k\right) - ω \left(k\right)$ (31) $ce \left(k\right) = e \left(k\right) - e \left(k-1\right)$ (32)

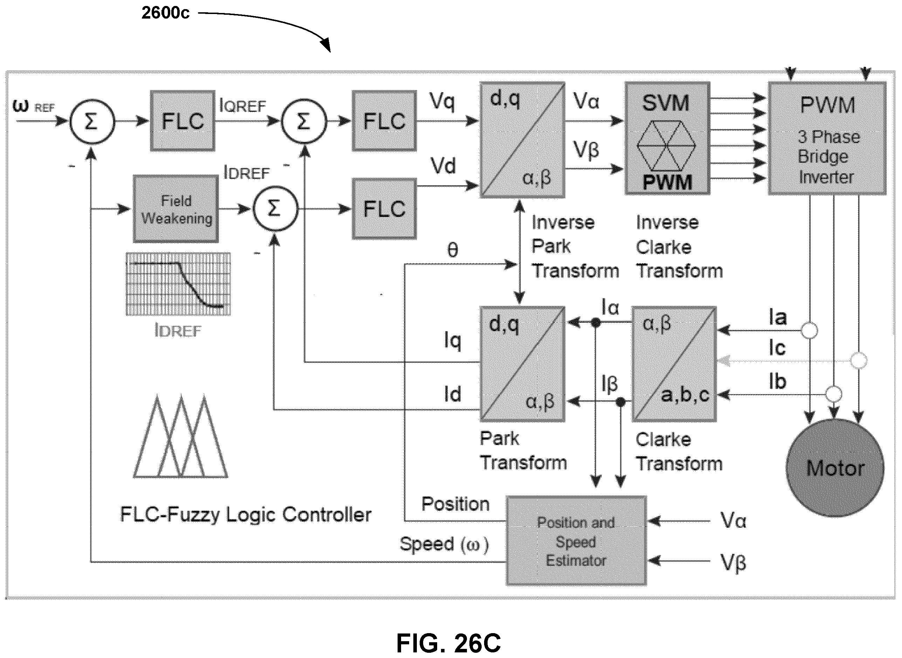

**FIG. 26C** illustrates, in a block diagram, an example of sensorless field oriented control **2600c** using FLC, in accordance with some embodiments. In this example, three FLCs are used instead of three Pls. This allows for the generation of 3D prediction with more parameters, faster and better, with the capability to learn (rather than simply repeating static algorithm steps).

### ANN Controller (ANNC)

Artificial Neural Network (ANN) includes distributed parallel computing made up of a number of processing units, which have a natural tendency to store knowledge and making it available as and when required. The simplest such processing unit is called a neuron. The inspiration for ANN is drawn from the human brain; a highly complicated structure made up of neurons and can perform or is trained to perform certain computations many times faster than most computers in existence today, examples: power generation control, pattern recognition including face recognition, motor control, etc.

Artificial Neural Network (ANN) has been applied to a wide range of dynamic system applications in recent years. Advantages of ANN controllers over the conventional ones presented in robustness, parallel distributed structure, and ability to learn as well as capability of handle nonlinear situations. These advantages support the ANN in playing a major role in solving uncertainty problems in motor drive systems, like stator resistance variation and dc voltage measuring operations in existence of high switching surges, leads to uncertainty in torque and flux estimation which in turn leads to torque ripple and in worst case it may lead to generation of breaking torque.

Neural networks are machines that can be modeled to perform a particular task mimicking the human brain. The network can be modeled by electronic components or simulated on computer software. In the following figures is presented the PMSM control using two versions of ANN Controller (speed controller and motor position estimator).

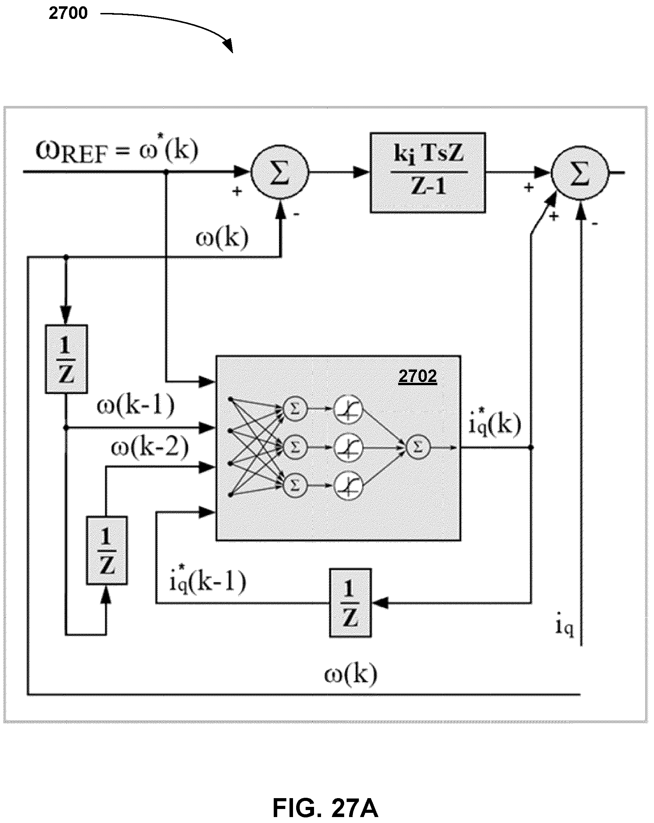

**FIG. 27A** illustrates, in a block diagram, a detailed example of an ANN speed controller which can be used in a FOC, in accordance with some embodiments. Block **2702** determines Iq(k) (see **FIGs. 16A** to **16F**).

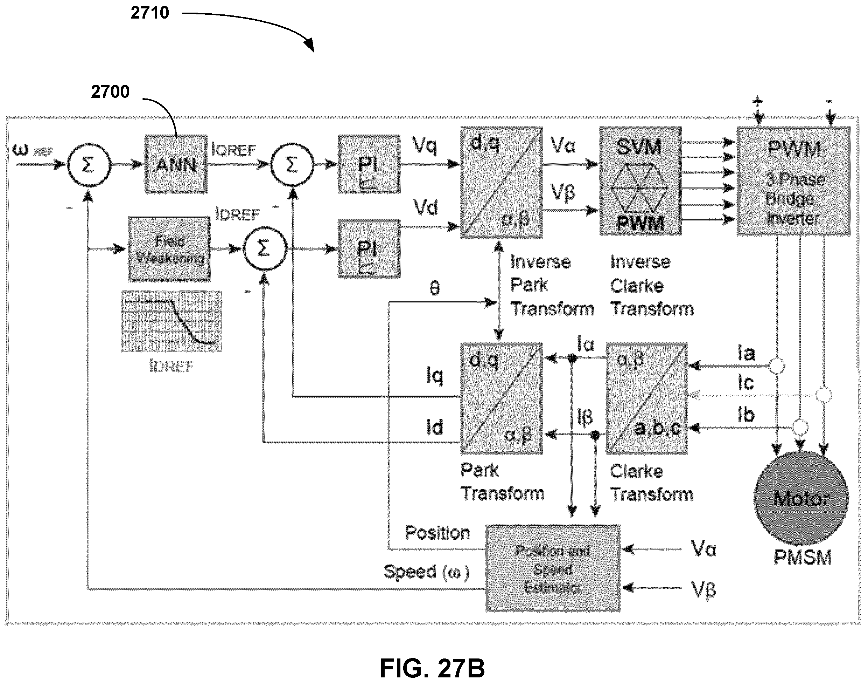

**FIG. 27B** illustrates, in a block diagram, an example of PMSM Sensorless Field Oriented Control using the ANN speed controller illustrated in **FIG.27A** applied to the swim spa system, in accordance with some embodiments. An ANN controller **2700** is used in the place of an FLC (see **FIG. 15B****)** or PI (see **FIG. 15A**).

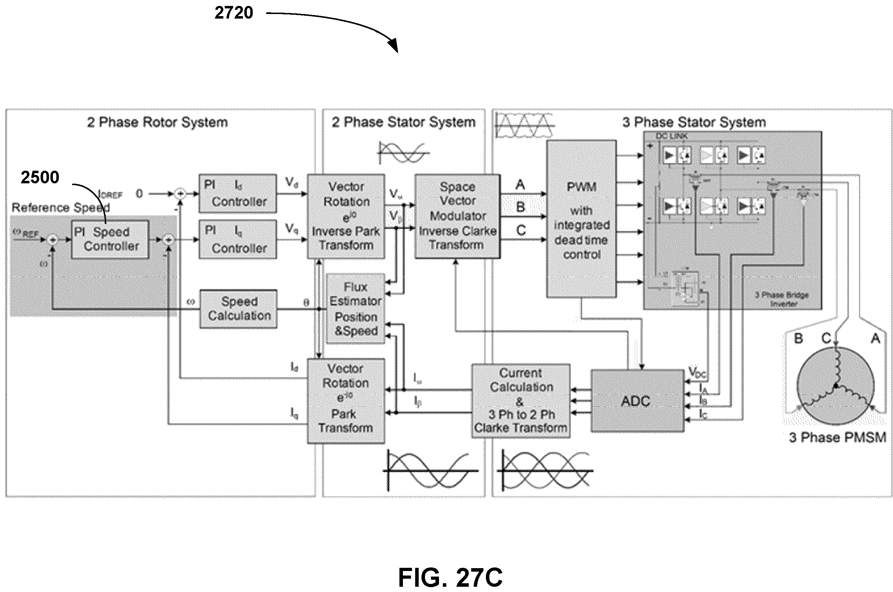

**FIG. 27C** illustrates, in a block diagram, an example of common PMSM Sensorless Field Oriented Control **2720** using proportional integral derivative (PID) **2500** applied to the swim spa system **400,** in accordance with some embodiments.

The PI controller **2500** first comes from the continuous system: $C \left(s\right) = {K}_{p} + {K}_{i} / s$ (33) where Kₚ and Kᵢ are the parameters of the PI controller **2500.** Equation (33) is digitalized by the backward difference method: $s = \left(1-{Z}^{- 1}\right) / {T}_{s} \left(b\right) ; s = \left(Z-1\right) / \left({ZT}_{s}\right)$ (34) where Tₛ is the sampling time. To substitute Equation (34) into Equation (33), the resulting digital PI controller **2100** is: $C \left(z\right) = {K}_{p} + \left({K}_{i}{T}_{s}Z\right) / \left(Z-1\right)$ (35)

The Equation (35) term (KiTsZ)/ (Z-1) is the I (integrator) of the function added to the end of ANN controller **2700** to correct the ANN dynamics.

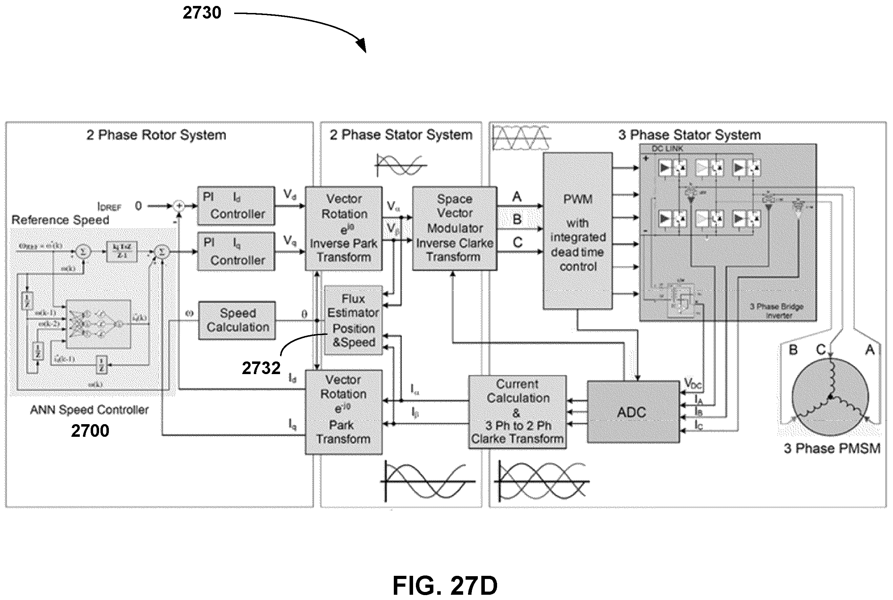

**FIG. 27D** illustrates, in a block diagram, an example of PMSM sensorless field oriented control **2730** using ANN speed controller **2700** applied to the swim spa system **400,** in accordance with some embodiments. In this example, the first PI controller **2500** (see **FIG. 27C**) is replaced with the ANN controller **2700.**

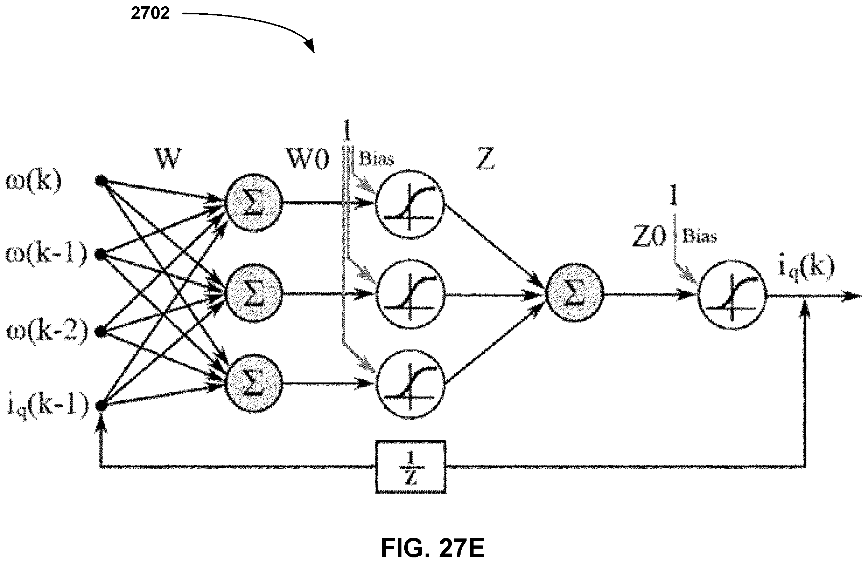

**FIG. 27E** illustrates, in a block diagram, an example of an ANN speed controller block **2702** with input/output configuration, in accordance with some embodiments.

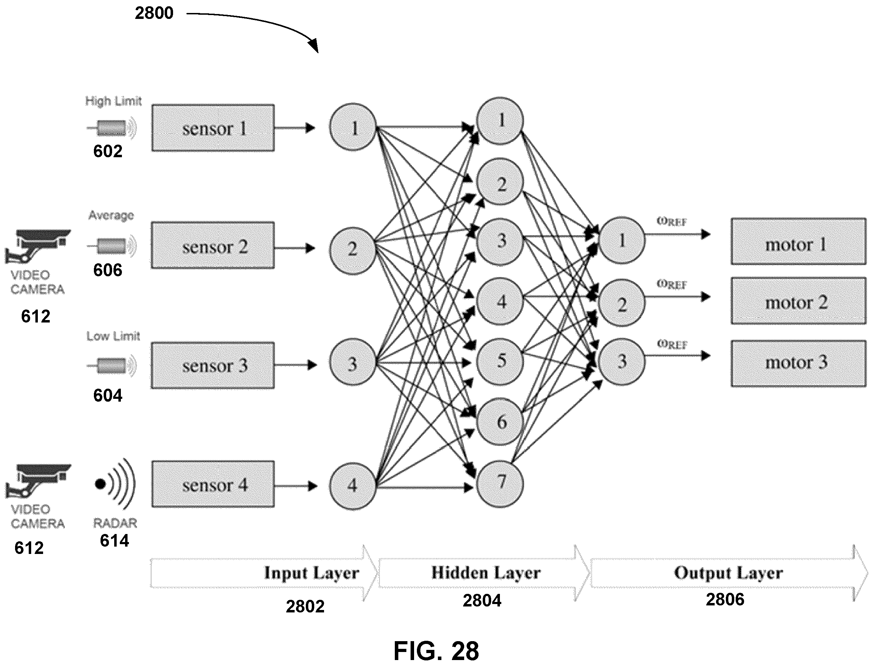

**FIG. 28** illustrates, in a schematic diagram, an example of an ANN algorithm configuration **2800** for a swim spa system **400,** in accordance with some embodiments. **FIG. 28** illustrates how sensor data (see **FIGs. 6A** to **6G**) is input into the ANN controller **2700.**

To design artificial neural network based speed controller and observer for PMSM motor drive, PMSM is modeled. The PMSM model is described above. It is possible to obtain the analytically inverse dynamic of the PMSM after some calculations starting from the differential equations of the mathematical model.

The classic PI (Proportional and Integral) regulator is well suited to regulating the torque and flux feedback to the desired values as it is able to reach constant references, by correctly setting both the P (proportional) term (Kpi) and the I (Integral) term (Ki) which are respectively responsible for the error sensibility and for the steady state error. The control equation which the PI controller involves is: ${i}_{q} = {K}_{p} Δω + {K}_{i} \int Δωdt$ (36)

Traditional PI controller will produce satisfactory results for fixed parameter system but it cannot achieve high results for the high precision PMSM drive. Artificial neural network has the ability of self-learning and self-regulatory. One of the important aspects of applying an ANN to any particular problem is to formulate the inputs and outputs of the ANN structure.

In **FIG. 28****,** an example of the structure of the ANN controller **2800** is presented which comprises three layers: input layer **2802,** hidden layer **2804** and output layer **2806,** the inputs of the ANN controller are the speed error of the motor. The corresponding output target is the torque (direct proportional with iq): ${T}_{e} = {K}_{T} {i}_{q}$ (37) where K_{T}= 3/2 P λ_{f} ${i}_{q} \left(k\right) = {Ai}_{q} \left(k-1\right) + \left(B/e\right) \left(ω\left(k+1\right)-\left(a-eC/B\right)ω\left(k\right)\right) - \left(B/e\right) \left(b\left(ω\left(k-1\right)+{cω}^{2}\left(k\right)+{dω}^{2}\left(k-1\right)+f\right)\right.$ (38) where A, B, C, a, b, c, d, f are constants and depends by motor parameters, structure of controller and sample time.

After the inputs and output are formulated **2802,** the next step is to incorporate the hidden layers **2804.** Number of hidden layers **2804** and number of neurons in the hidden layer are chosen by trial and error, smaller numbers are better (less computational time in terms of necessary memory and algorithm time calculation).

In this example, the structure of ANN controller with 7 neurons (one hidden layer **2802** having three neurons) produces very good results in comparison with the equivalent PI controller. After the design of the ANN structure, the next step is to train the neural network using the Levenberg-Marquardt back propagation algorithm, which quickly converge to the prescribed error. In some embodiments, an integral component may be added to the output of the ANN to correct the ANN dynamics.

### ANN Position and Speed Estimator

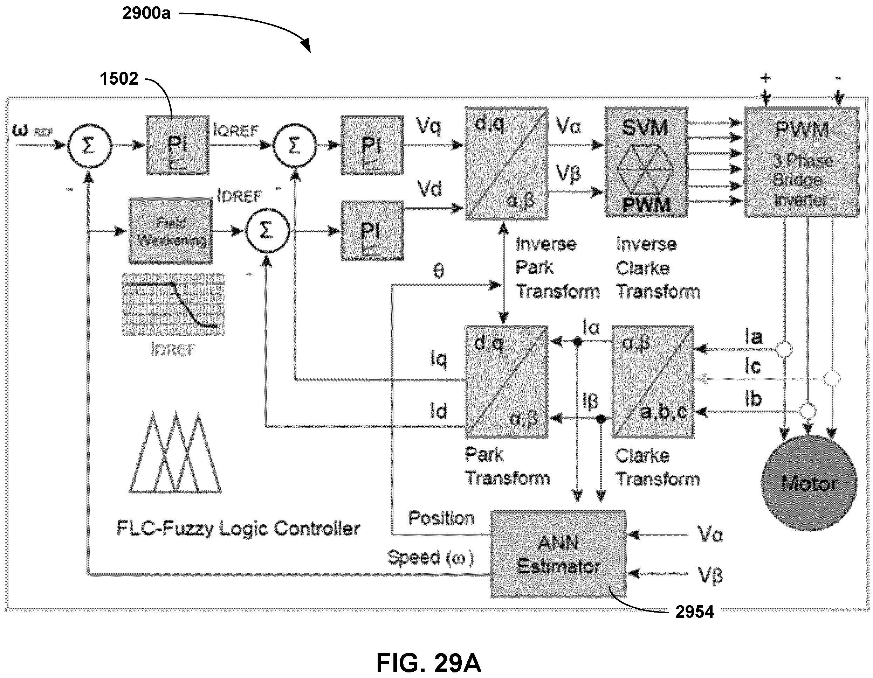

**FIG. 29A** illustrates, in a block diagram, an example of sensorless FOC using an ANN position and speed estimator **2900a,** in accordance with some embodiments. In this example, the estimator **1554** (see **FIG. 15B****)** is replaced with an ANN estimator **2954.**

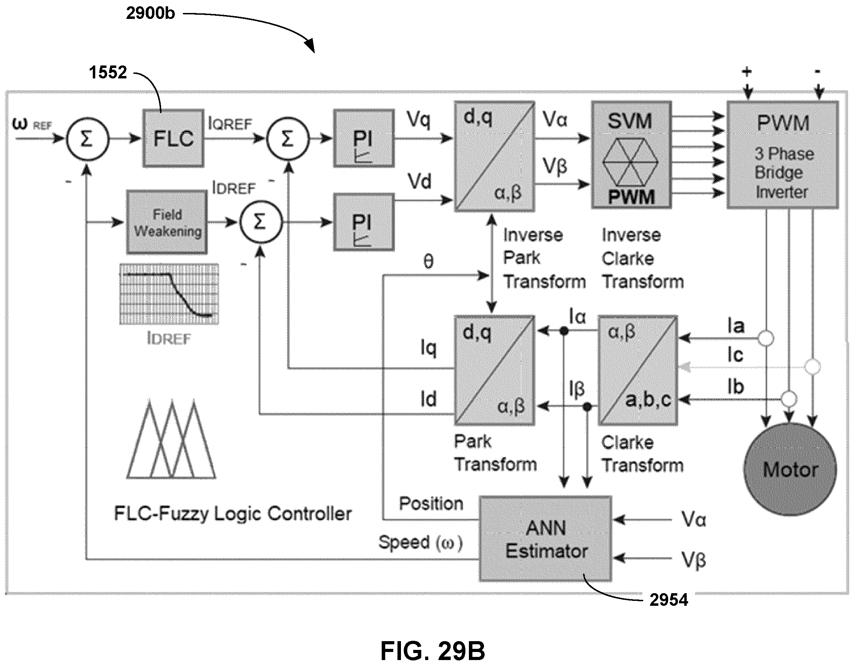

**FIG. 29B** illustrates, in a block diagram, another example of sensorless FOC using a position and speed estimator having ANN logic **2900b,** and a FLC, and FLC speed controller **1552** instead of the PI **1502** for I_{QREF} in accordance with some embodiments.

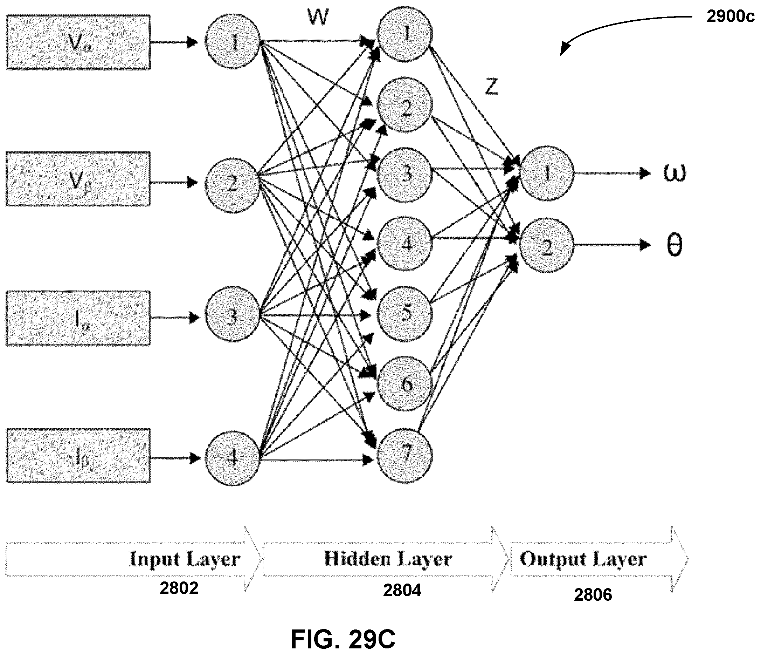

**FIG. 29C** illustrates, in a block diagram, an example of an ANN position and speed estimator with input/output configuration **2900c,** in accordance with some embodiments. In this example, one ω and one θ determined for one motor using the ANN estimator **2952** is shown.

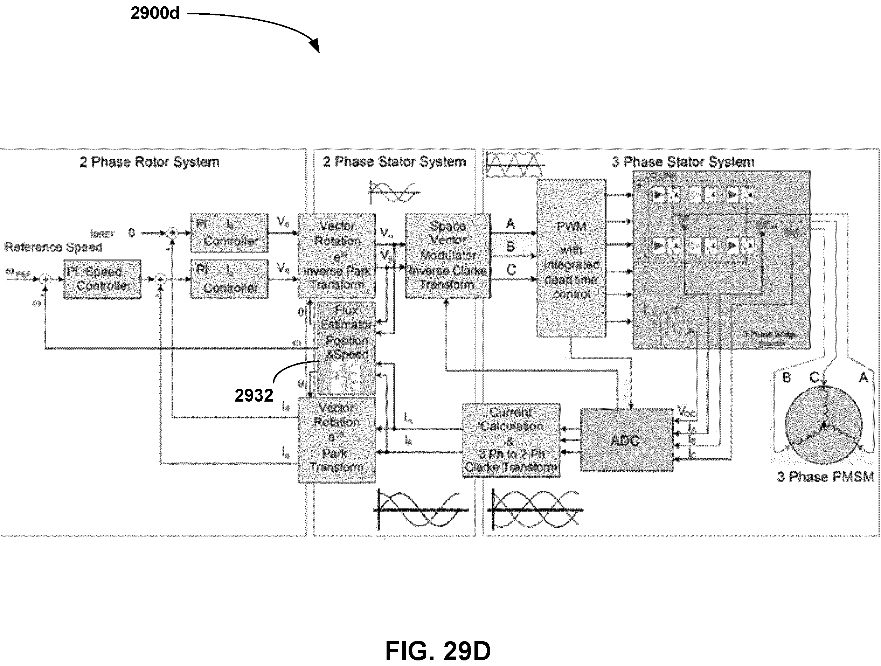

**FIG. 29D** illustrates, in a block diagram, another example of sensorless FOC using ANN position and speed estimator **2900d** showing how the ANN position and speed estimator **2900c** presented in **FIG. 29C** is integrated into a sensorless FOC diagram, in accordance with some embodiments. I.e., the flux estimator **1532** (magnetic field of rotor) of **FIG. 27D** is replaced with the ANN position and speed estimator **2900c.**

The neural networks algorithm will assure the accuracy of the rotor position estimation to achieve the stability and robustness of the system. The updating of neural network parameters is based on the steepest descent method to find the best solutions of weightings.

The calculation of rotor position estimating and velocity control of the sensorless neural velocity observer for the permanent magnet synchronous motor (PMSM) is based on the PMSM mathematical model.

From the stationary a-b-c frame to the α-β frame and the rotating d-q frame, the voltage equations of PMSM are given as [1-12]: $\left[\begin{matrix}{v}_{α} \\ {v}_{β}\end{matrix}\right] = \left[\begin{matrix}{R}_{s} + \frac{d}{dt} {L}_{s} & 0 \\ 0 & {R}_{s} + \frac{d}{dt} {L}_{s}\end{matrix}\right] \left[\begin{matrix}{i}_{α} \\ {i}_{β}\end{matrix}\right] + \left[\begin{matrix}{e}_{α} \\ {e}_{β}\end{matrix}\right]$ (39) $\left[\begin{matrix}{v}_{d} \\ {v}_{q}\end{matrix}\right] = \left[\begin{matrix}{R}_{s} + \frac{d}{dt} {L}_{s} & - {ω}_{e} {L}_{s} \\ {ωL}_{s} & {R}_{s} + \frac{d}{dt} {L}_{s}\end{matrix}\right] \left[\begin{matrix}{i}_{d} \\ {i}_{q}\end{matrix}\right] + \left[\begin{matrix}0 \\ {ω}_{e} {λ}_{f}\end{matrix}\right]$ (40) where v_{q}, v_{q}, i_{d}, i_{q} are d- and q-axis voltages and currents, respectively; Rₛ and Lₛ are the resistance and inductance; λ_{f} is flux linkage due to the permanent magnets; and ωₑ is the electric speed. The α - and β -axis back EMFs are: ${e}_{α} = - {λ}_{f} {ω}_{e} sin {θ}_{e}$ (41) ${e}_{β} = - {λ}_{f} {ω}_{e} cos {θ}_{e}$ (42)

The block diagram of a sensorless PMSM control system is shown in **FIG.** 29D. In order to compensate the rotor position estimation error due to the process of motor speed tracking and noise, a neural network (NN) structure is shown in **FIG.** 29C. The estimated rotor angle is: ${θ}_{e} = arctan \left({e}_{α}/{e}_{β}\right)$ (43) ${ω}_{e} = \left(1/{λ}_{f}\right) √ \left({eα}^{2}+{eβ}^{2}\right)$ (44) ${I}_{m} = √ \left({{i}_{d}}^{2}+{{i}_{q}}^{2}\right)$ (45) where Iₘ=the supply current $\left(\begin{matrix}{i}_{q} \\ {i}_{d}\end{matrix}\right) = {I}_{m \left(\begin{matrix}sin α \\ cos α\end{matrix}\right)}$ (46) ${T}_{e} = {K}_{T} {i}_{q}$ (47) ${T}_{L} = {T}_{e rated} \left({ω}_{rated}/ω\right)$ (48)

Rotor speed is calculated by differentiating the rotor position angle as follows: ${ω}_{e} = \left(θe \left(n\right)-{θ}_{e} \left(n-1\right)\right. / {T}_{s}$ (49) where Tₛ is the speed sampling period. ${ω}_{e} = {dθ}_{e} / dt$ (50)

### Hybrid Control Algorithms

Analyzing the above algorithms it leads to the idea that even the best linear or nonlinear algorithms had limitations and no single controller has it all. Here are few examples, which are not in any way exhaustive of what is in literature.

A hybrid fuzzy controller with back stepping and sliding mode control could successfully eliminate chattering effect of the sliding mode control algorithm. A feedback linearization controller parallel with a high-order sliding mode controller: the sliding mode controller used as an observer and estimator of external disturbances showed good disturbance rejection and robustness.

Adaptive control via back stepping combined with neural networks, the back stepping used to achieve good tracking of rotor position and maintaining stability. Neural networks were used to compensate for un modeled dynamics.

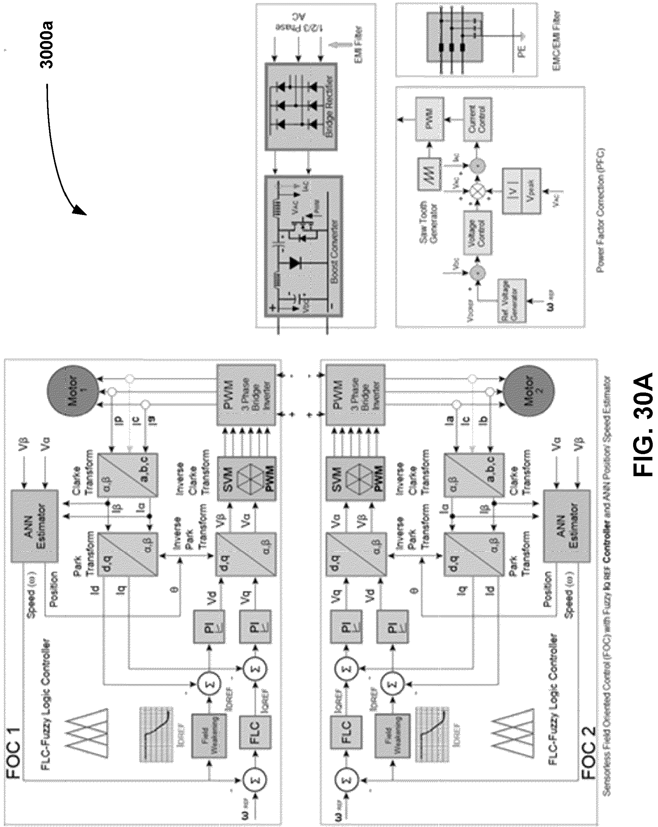

**FIG. 30A** illustrates, in a schematic diagram, an example of a sensorless FOC with fuzzy I_{Q REF} controller and ANN position speed estimator for two motors **3000a,** in accordance with some embodiments. In this example, the pumps are powered by two PMSM having two intelligent variable speed drives (VSD) - FOC with/ without field weakening reference (this is used for high motor speed or if the motor needs to be overloaded and the cooling system allows the heat excess). In this example, one filter and one PFC are used for both drives rather than two filters and PFCs in parallel.

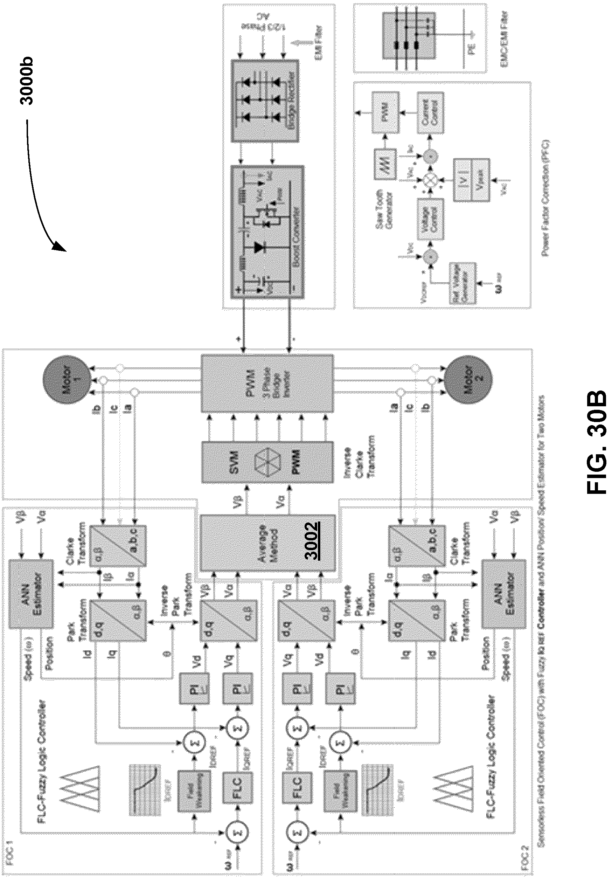

**FIG. 30B** illustrates, in a schematic diagram, another example of a single SVM/PWM bridge sensorless FOC with fuzzy I_{Q REF} controller and ANN position speed estimator for two motors **3000b,** in accordance with some embodiments. In this example, the pumps are powered by two PMSM having a single intelligent variable speed drives (VSD) - FOC with/ without field weakening reference (this is used for high motor speed or if the motor needs to be overloaded and the cooling system allows the heat excess). Thus, an "averaging" method **3002** is applied such that only one SWM and one PWM are used (i.e., one bridge instead of two). This has the effect of combining the results of two ANN estimators.

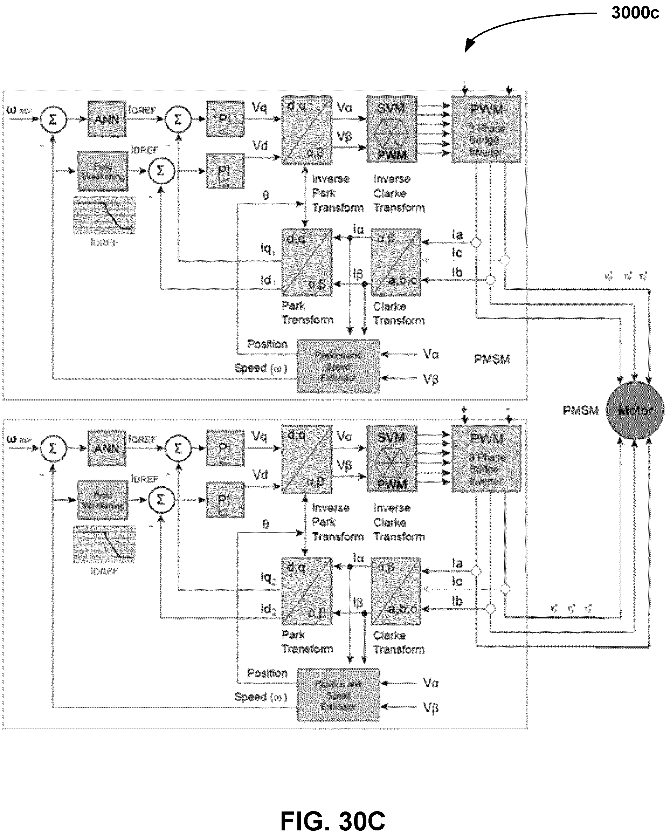

**FIG. 30C** illustrates, in a schematic diagram, an example of a sensorless FOC with fuzzy I_{Q REF} controller and ANN position speed estimator for a six phase motor **3000c,** a motor with six phase has less volume for the same power and better speed accuracy, in accordance with some embodiments.

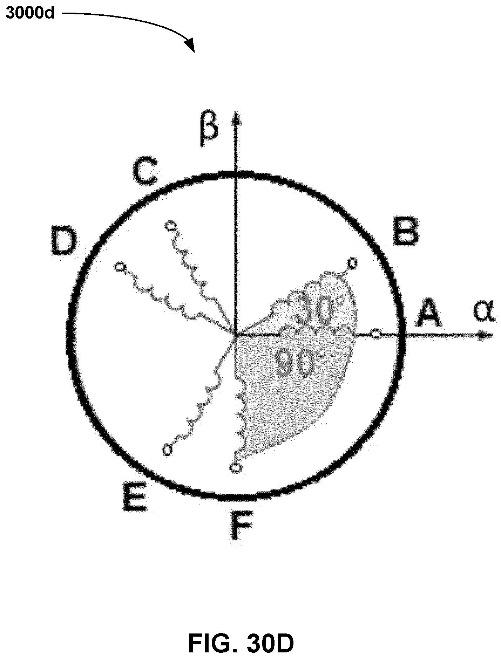

**FIG. 30D** illustrates, an example of a winding arrangement of a six-phase PMSM **3000d,** in accordance with some embodiments. The six-phase motor can be assimilated to dual 3-phase magnet (PM) synchronous motors having two sets of 3-phase windings spatially shifted by 30 electrical degrees.

### Comparison of Control Algorithms

As described above, there are various algorithms as applied to swim spa flow control system with all motor (pumps) equal action (flow). The performance of a particular algorithm depends on many factors that may not even be modeled.

In some embodiments, the swim in place pool (swim spa) with VSP may provide energy efficiency, ANN methods/algorithms and versatility with respect to future software changes with minimal, if any, hardware changes. Variable speed pumps provide energy efficiency (see **Table 2** and **Table 3** below) and are adjustable. The variable speed pumps can cut the energy cost by 75% when compared to traditional single-speed pump designs that use more energy than is necessary to circulate the desired flow (wasting energy in the diverted flow). When running the water jets at any flow, variable speed pumps will use the amount of energy required to get the job done in an efficient manner possible (e.g., PMSM efficiency is 92.4% at maximum power). Artificial Neural Network (ANN) algorithms are inspired by the human brain; the artificial neurons are interconnected and communicate with each other, each connection is weighted by previous learning events and with each new input of data more learning takes place. They face any situation and chose the right action on time, any time, and every time. In some embodiments, the software based on ANN algorithms may not need maintenance, is self-learning and may improve itself.

**Table 2: Energy Efficiency**

| **Pump Type** | **Max Flow (GPM)** | **Max Head (PSI)** | **Power Consumption (kW)** | **Amperage (A)** | **Motor Efficiency (%)** | **Frequency (Hz)** | **Comments** |
|---|---|---|---|---|---|---|---|
| **XP3-NA** | 400 | 12 | 4.0 | 19 | 75 | 60 | 1.0 kW extra power |
| | | | | | | 3450 RPM | 17.4% less efficient |
| **XP3-EU** | 290 | 9 | 3.0 | 13 | 78 | 50 | 15.4% less efficient |
| | | | | | | 2850 RPM | |
| **VSP AX** | 417 | 13 | 3.0 | 13 | 92.4 | 240 | Max. efficiency |
| | | | | | | 3600 RPM | |

The Affinity Laws state the following:
- Law #1: "The flow varies directly with the speed or impeller size.
- Law #2: "The head varies by the square of the speed or impeller size.
- Law #3: The power varies by the cube of the speed or impeller size.
- Law #4: The torque varies by the square of the speed or impeller size.
The pump Affinity Laws work two ways: the speed or the size of the pump impeller may be varied. However, with one impeller size, lays the benefit of varying the speed of the motor arises. Because of Affinity Laws the VSP pump (max. 3600RPM) gain 17GPM and 1PSI vs. North American XP3 without any extra consumption (it is the effect of the plus 150RPM).

**Table 3: Power/Amperage**

| **Pump Type** | **Power (kW)/Amperage (A)** | | | | | | | | | |
|---|---|---|---|---|---|---|---|---|---|---|
| **Aqua Pro** | 1 | 2 | 3 | 4 | 5 | 6 | 7 | 8 | 9 | 10 |
| **XP3-NA** | 4.0 /19 | 4.0 /19 | 4.0 /19 | 4.0 /19 | 4.0 /19 | 4.0 /19 | 4.0 /19 | 4.0 /19 | 4.0 /19 | 4.0 /19 |
| **XP3-EU** | 3.0 /13 | 3.0 /13 | 3.0 /13 | 3.0 /13 | 3.0 /13 | 3.0 /13 | 3.0 /13 | 3.0 /13 | 3.0 /13 | 3.0 /13 |
| **VSP AX** | 0.115 /0.5 | 0.253 /1.1 | 0.322 /1.4 | 0.483 12.1 | 0.667 /2.9 | 0.943 14.1 | 1.52 /6.6 | 2.047 /8.9 | 2.714 /11.8 | 3.0 /13 |

The variable speed motor is a permanent magnet synchronous motor (PMSM) and it is the highest efficiency AC motor- see above tables; in particular the motor used in an experimental prototype is a 3 phase motor capable to work in 50/60 Hz delivering the same performance (the swim spa NA and EU will be identical, except the pack- still need 50Hz or 60Hz). Note: the VFD (variable frequency drive) is capable to work in single phase or three phase covering all European country in terms of power. With a single-speed mode of operation, long time periods that would normally use full power can be replaced by long periods of substantially less power with short periods when full power may be needed. Above, **Table 2** shows that the current solution requires 4kW respective 3kW even if the swimmer is using the speed level 5 or 6 (Aqua Pro) and in reality that could be covered with 0.667 kW or 0.943 kW, approximately 4-6 times less than current solution.

In some embodiments, the swim spa has the capability to be completely and remotely controlled from anywhere on the world using loT (Internet of Things) technology, Internet access and a proprietary Al Application (e.g., for iOS, Android, and other operating systems).

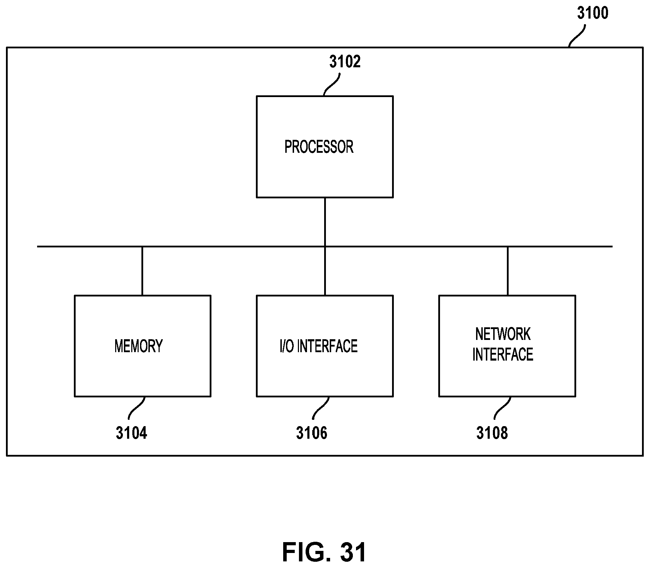

**FIG. 31** is a schematic diagram of a computing device **3100** such as a server. As depicted, the computing device includes at least one processor **3102,** memory **3104,** at least one I/O interface **3106,** and at least one network interface **3108.**

Processor **3102** may be an Intel or AMD x86 or x64, PowerPC, ARM processor, or the like. Memory **3104** may include a suitable combination of computer memory that is located either internally or externally such as, for example, random-access memory (RAM), read-only memory (ROM), compact disc read-only memory (CDROM).

Each I/O interface **3106** enables computing device **3100 to** interconnect with one or more input devices, such as a keyboard, mouse, camera, touch screen and a microphone, or with one or more output devices such as a display screen and a speaker.

Each network interface **3108** enables computing device **3100 to** communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Although the embodiments have been described in detail, it should be understood that various changes, substitutions and alterations can be made herein.

As can be understood, the examples described above and illustrated are intended to be exemplary only.

## Claims

1. A swim in place method comprising:
receiving sensor data from at least one sensor (120, 310);
receiving infrared (IR) images and swimming patterns from a Time of Flight (ToF) IR sensor (610f), of a swimmer in a swim in place pool (15);
building a three-dimensional (3D) map of the swimmer, using the IR images and swimming patterns using an Artificial Neural Network (ANN) microprocessor;
comparing the 3D map with one or more swimmer stored templates, to obtain a corresponding comparison score similarity for each of the one or more swimmer stored templates by the ANN microprocessor (110);
authenticating, by the ANN microprocessor a swimmer identity when the corresponding comparison score similarity for a swimmer stored template is higher than a threshold value,
actuating at least one pump (130) in the swim in place pool (15), the at least one pump associated with the at least one sensor to set an angular speed of the at least one pump (130) when the swimmer is positioned inside a set perimeter within said swim in place pool (15);
learning, by an Al, the behaviour of the swimmer to generate and maintain the authenticated swimmer identity;
predicting, based on the authenticated swimmer identity, when to actuate, increase, or decrease the Rotations Per Minutes (RPM) of the at least one pump (130); and
adjusting the RPM of the at least one pump (130) as required to keep the swimmer as close as possible to the centre or middle of the swim in place pool (15).

2. The swim in place method as claimed in claim 1, wherein the swimmer identity comprises at least one of:
a swimmer height;
a swimmer length;
a swimmer size;
a swimmer identity; or
a swimmer velocity and pattern.

3. The swim in place method as claimed in any of the preceding claims, comprising:
associating a current revolutions per minute (RPM) of the at least one pump (130) with a current swim velocity at a current time; and adjusting a swimmer velocity and pattern in the swimmer identity to reflect the current swim velocity and current time.

4. The swim in place method as claimed in any of the preceding claims,
wherein the set perimeter is the approximate center of the swim in place pool (15) at a plane approximately at a water surface level, actuating the at least one pump (130) causes a water current from a front end (19) of the swim in place pool to a back end (21) of a swim in place pool, and the at least one sensor (120) is positioned relative to the swim in place pool to detect a location of the swimmer; and
comprising adjusting a revolutions per minute (RPM) of the at least one pump (130) based on the location of the swimmer;
wherein:
the set perimeter comprises at least one of:
a front end limit (602),
a back end limit (604), or
an average position (606);
the at least one sensor comprises at least one of:
a front sensor (622) monitoring the front end limit (602),
a back sensor (624) monitoring the back end limit (604), or
a side sensor (626) monitoring the average position (606); and
comprising at least one of:
increasing the RPM of the at least one pump (130) when the swimmer is near or past the front end limit (602),
decreasing the RPM of the at least one pump (130) when the swimmer is near or past the back end limit (604), or
adjusting the RPM of the at least one pump (130) based on the location of the swimmer relative to the average position (606).

5. The swim in place method as claimed in any of the preceding claims, comprising:
obtaining a current angular speed of the at least one pump (130);
predicting a next angular speed of the at least one pump required to maintain the swimmer within the set perimeter; and
determining a change in angular speed to apply to the at least one pump (130).

6. The swim in place method as claimed in any of the preceding claims, comprising:
receiving, from the at least one sensor (120, 310), at least one of water temperature data, air humidity data, or air temperature data; and
adjusting the RPM of at least one pump based on a speed setting associated with at least one of:
a water temperature setting,
an air humidity setting, or
an air temperature setting.

7. The swim in place method as claimed in any of the preceding claims, wherein the at least one sensor (120, 310) comprises at least one of:
an electromagnetic sensor (610a);
an infra-red transmission sensor (600b);
a laser transmission sensor (610c);
an ultrasonic sensor (610d);
a photoelectric sensor;
a radar sensor (614);
a video camera (612);
a time-of-flight sensor (610f); or
a light detection and ranging (Lidar) sensor (610g).

8. The swim in place method as claimed in claim 7, wherein the radar sensor (614) is a nanoRadar sensor.

9. The swim in place method as claimed in claim 7, wherein the light detection and ranging (LiDAR) sensor (610g) is a nanoLidar sensor.

10. A swim in place system comprising:
a swim in place pool (15);
at least one sensor (120, 310);
at least one pump (130) associated with said at least one sensor (120, 310);
at least one processor (110); and
a memory (140) comprising:
one or more swimmer body templates; and
instructions which, when executed by the at least one processor (110 configure the at least one processor (110) to perform the method of any one of claims 1 to 9.

## Patentansprüche

1. Verfahren zum Schwimmen auf der Stelle, umfassend:
Empfangen von Sensordaten von mindestens einem Sensor (120, 310);
Empfangen von Infrarot(IR)-Bildern und Schwimmmustern eines Schwimmers in einem Becken zum Schwimmen auf der Stelle (15) von einem Laufzeit(ToF)-IR-Sensor (610f);
Erstellen einer dreidimensionalen (3D-)Karte des Schwimmers unter Verwendung der IR-Bilder und Schwimmmuster mithilfe eines Mikroprozessors für ein künstliches neuronales Netz (ANN);
Vergleichen der 3D-Karte mit einer oder mehreren gespeicherten Schwimmervorlagen, um einen entsprechenden Vergleichswert der Ähnlichkeit für jede der einen oder mehreren gespeicherten Schwimmervorlagen zu erhalten, durch den ANN-Mikroprozessor (110);
Authentifizieren einer Schwimmeridentität durch den ANN-Mikroprozessor, wenn der entsprechende Vergleichswert der Ähnlichkeit für eine gespeicherte Schwimmervorlage höher als ein Schwellenwert ist,
Betätigen mindestens einer Pumpe (130) in dem Becken zum Schwimmen auf der Stelle (15), wobei die mindestens eine Pumpe dem mindestens einen Sensor zugeordnet ist, um eine Winkelgeschwindigkeit der mindestens einen Pumpe (130) einzustellen, wenn der Schwimmer innerhalb eines festgelegten Perimeters in dem besagten Becken zum Schwimmen auf der Stelle (15) positioniert ist;
Erlernen des Verhaltens des Schwimmers durch eine KI, um die authentifizierte Schwimmeridentität zu erzeugen und aufrechtzuerhalten;
Vorhersagen, basierend auf der authentifizierten Schwimmeridentität, wann die Rotationen pro Minute (RPM) der mindestens einen Pumpe (130) zu betätigen, zu erhöhen oder zu verringern sind; und
Anpassen der RPM der mindestens einen Pumpe (130) nach Bedarf, um den Schwimmer so nah wie möglich am Zentrum oder an der Mitte des Beckens zum Schwimmen auf der Stelle (15) zu halten.

2. Verfahren zum Schwimmen auf der Stelle nach Anspruch 1, wobei die Schwimmeridentität mindestens eines von Folgendem umfasst:
eine Schwimmerhöhe;
eine Schwimmerlänge;
eine Schwimmergröße;
eine Schwimmeridentität; oder
eine Schwimmergeschwindigkeit und ein Schwimmermuster.

3. Verfahren zum Schwimmen auf der Stelle nach einem der vorhergehenden Ansprüche, umfassend:
Zuordnen einer aktuellen Anzahl von Umdrehungen pro Minute (RPM) der mindestens einen Pumpe (130) zu einer aktuellen Schwimmgeschwindigkeit zu einem aktuellen Zeitpunkt; und
Anpassen einer Schwimmergeschwindigkeit und eines Schwimmermusters in der Schwimmeridentität, um die aktuelle Schwimmgeschwindigkeit und den aktuellen Zeitpunkt widerzuspiegeln.

4. Verfahren zum Schwimmen auf der Stelle nach einem der vorhergehenden Ansprüche,
wobei der festgelegte Perimeter das ungefähre Zentrum des Beckens zum Schwimmen auf der Stelle (15) in einer Ebene ungefähr auf einem Wasseroberflächenniveau ist, das Betätigen der mindestens einen Pumpe (130) eine Wasserströmung von einem vorderen Ende (19) des Beckens zum Schwimmen auf der Stelle zu einem hinteren Ende (21) eines Beckens zum Schwimmen auf der Stelle bewirkt und der mindestens eine Sensor (120) relativ zu dem Becken zum Schwimmen auf der Stelle so positioniert ist, dass er einen Ort des Schwimmers erfasst; und
umfassend das Anpassen einer Anzahl von Umdrehungen pro Minute (RPM) der mindestens einen Pumpe (130) basierend auf dem Ort des Schwimmers;
wobei:
der festgelegte Perimeter mindestens eines von Folgendem umfasst:
eine vordere Endgrenze (602),
eine hintere Endgrenze (604) oder
eine durchschnittliche Position (606);
der mindestens eine Sensor mindestens eines von Folgendem umfasst:
einen vorderen Sensor (622), der die vordere Endgrenze (602) überwacht,
einen hinteren Sensor (624), der die hintere Endgrenze (604) überwacht, oder
einen seitlichen Sensor (626), der die durchschnittliche Position (606) überwacht; und
umfassend mindestens eines von Folgendem:
Erhöhen der RPM der mindestens einen Pumpe (130), wenn sich der Schwimmer nahe an oder jenseits der vorderen Endgrenze (602) befindet,
Verringern der RPM der mindestens einen Pumpe (130), wenn sich der Schwimmer nahe an oder jenseits der hinteren Endgrenze (604) befindet, oder
Anpassen der RPM der mindestens einen Pumpe (130) basierend auf dem Ort des Schwimmers relativ zu der durchschnittlichen Position (606).

5. Verfahren zum Schwimmen auf der Stelle nach einem der vorhergehenden Ansprüche, umfassend:
Erhalten einer aktuellen Winkelgeschwindigkeit der mindestens einen Pumpe (130);
Vorhersagen einer nächsten Winkelgeschwindigkeit der mindestens einen Pumpe, die erforderlich ist, um den Schwimmer innerhalb des festgelegten Perimeters zu halten; und
Bestimmen einer Änderung der Winkelgeschwindigkeit, die auf die mindestens eine Pumpe (130) anzuwenden ist.

6. Verfahren zum Schwimmen auf der Stelle nach einem der vorhergehenden Ansprüche, umfassend:
Empfangen mindestens eines von Wassertemperaturdaten, Luftfeuchtigkeitsdaten oder
Lufttemperaturdaten von dem mindestens einen Sensor (120, 310); und
Anpassen der RPM mindestens einer Pumpe basierend auf einer Geschwindigkeitseinstellung,
die mindestens einem von Folgendem zugeordnet ist:
einer Wassertemperatureinstellung,
einer Luftfeuchtigkeitseinstellung oder
einer Lufttemperatureinstellung.

7. Verfahren zum Schwimmen auf der Stelle nach einem der vorhergehenden Ansprüche, wobei der mindestens eine Sensor (120, 310) mindestens eines von Folgendem umfasst:
einen elektromagnetischen Sensor (610a);
einen Infrarot-Transmissionssensor (600b);
einen Laser-Transmissionssensor (610c);
einen Ultraschallsensor (610d);
einen photoelektrischen Sensor;
einen Radarsensor (614);
eine Videokamera (612);
einen Laufzeitsensor (610f); oder
einen Sensor zur Lichtdetektion und Entfernungsmessung (Lidar) (610g).

8. Verfahren zum Schwimmen auf der Stelle nach Anspruch 7, wobei der Radarsensor (614) ein nanoRadar-Sensor ist.

9. Verfahren zum Schwimmen auf der Stelle nach Anspruch 7, wobei der Sensor zur Lichtdetektion und Entfernungsmessung (LiDAR) (610g) ein nanoLidar-Sensor ist.

10. System zum Schwimmen auf der Stelle, umfassend:
ein Becken zum Schwimmen auf der Stelle (15);
mindestens einen Sensor (120, 310):
mindestens eine Pumpe (130), die dem besagten mindestens einen Sensor (120 310) zugeordnet ist;
mindestens einen Prozessor (110); und
einen Speicher (140), umfassend:
eine oder mehrere Schwimmerkörpervorlagen; und
Anweisungen, die, wenn sie von dem mindestens einen Prozessor (110) ausgeführt werden, den mindestens einen Prozessor (110) dazu konfigurieren, das Verfahren nach einem der Ansprüche 1 bis 9 durchzuführen.

## Revendications

1. Procédé de nage sur place comprenant :
recevoir des données de capteur en provenance d'au moins un capteur (120, 310) ;
recevoir, d'un capteur IR à temps de vol (ToF) (610f), des images infrarouges (IR) et des schémas de nage, d'un nageur dans un bassin de nage sur place (15) ;
construire une carte tridimensionnelle (3D) du nageur, en utilisant les images IR et les schémas de nage, à l'aide d'un microprocesseur à réseau de neurones artificiels (ANN) ;
comparer la carte 3D à un ou plusieurs modèles de nageur stockés, pour obtenir un score de comparaison de similarité correspondant pour chacun des un ou plusieurs modèles de nageur stockés, par le microprocesseur ANN (110) ;
authentifier, par le microprocesseur ANN, une identité de nageur lorsque le score de comparaison de similarité correspondant pour un modèle de nageur stocké est supérieur à une valeur seuil,
actionner au moins une pompe (130) dans le bassin de nage sur place (15), l'au moins une pompe étant associée à l'au moins un capteur pour régler une vitesse angulaire de l'au moins une pompe (130) lorsque le nageur est positionné à l'intérieur d'un périmètre défini dans ledit bassin de nage sur place (15) ;
apprendre, par une IA, le comportement du nageur pour générer et maintenir l'identité de nageur authentifiée ;
prédire, en fonction de l'identité de nageur authentifiée, quand actionner, augmenter ou diminuer les rotations par minute (RPM) de l'au moins une pompe (130) ; et
ajuster les RPM de l'au moins une pompe (130) selon les besoins pour maintenir le nageur aussi près que possible du centre ou du milieu du bassin de nage sur place (15).

2. Procédé de nage sur place selon la revendication 1, dans lequel l'identité de nageur comprend au moins l'une parmi :
une hauteur de nageur ;
une longueur de nageur ;
une taille de nageur ;
une identité de nageur ; ou
une vitesse et un schéma de nageur.

3. Procédé de nage sur place selon l'une quelconque des revendications précédentes, comprenant :
associer un nombre de tours par minute (RPM) actuel de l'au moins une pompe (130) à une vitesse de nage actuelle à un instant actuel ; et
ajuster une vitesse et un schéma de nageur dans l'identité de nageur pour refléter la vitesse de nage actuelle et l'instant actuel.

4. Procédé de nage sur place selon l'une quelconque des revendications précédentes,
dans lequel le périmètre défini est le centre approximatif du bassin de nage sur place (15) dans un plan situé approximativement à un niveau de surface de l'eau, l'actionnement de l'au moins une pompe (130) provoque un courant d'eau d'une extrémité avant (19) du bassin de nage sur place vers une extrémité arrière (21) d'un bassin de nage sur place, et l'au moins un capteur (120) est positionné par rapport au bassin de nage sur place pour détecter un emplacement du nageur ; et
comprenant l'ajustement d'un nombre de tours par minute (RPM) de l'au moins une pompe (130) en fonction de l'emplacement du nageur ;
dans lequel :
le périmètre défini comprend au moins l'une parmi :
une limite d'extrémité avant (602),
une limite d'extrémité arrière (604), ou
une position moyenne (606) ;
l'au moins un capteur comprend au moins l'un parmi :
un capteur avant (622) surveillant la limite d'extrémité avant (602),
un capteur arrière (624) surveillant la limite d'extrémité arrière (604), ou
un capteur latéral (626) surveillant la position moyenne (606) ; et
comprenant au moins l'un parmi :
augmenter les RPM de l'au moins une pompe (130) lorsque le nageur est près ou au-delà de la limite d'extrémité avant (602),
diminuer les RPM de l'au moins une pompe (130) lorsque le nageur est près ou au-delà de la limite d'extrémité arrière (604), ou
ajuster les RPM de l'au moins une pompe (130) en fonction de l'emplacement du nageur par rapport à la position moyenne (606).

5. Procédé de nage sur place selon l'une quelconque des revendications précédentes, comprenant :
obtenir une vitesse angulaire actuelle de l'au moins une pompe (130) ;
prédire une vitesse angulaire suivante de l'au moins une pompe nécessaire pour maintenir le nageur à l'intérieur du périmètre défini ; et
déterminer une variation de vitesse angulaire à appliquer à l'au moins une pompe (130).

6. Procédé de nage sur place selon l'une quelconque des revendications précédentes, comprenant :
recevoir, de l'au moins un capteur (120, 310), au moins l'une parmi des données de température de l'eau, des données d'humidité de l'air ou des données de température de l'air ; et
ajuster les RPM d'au moins une pompe en fonction d'un réglage de vitesse associé à au moins l'un parmi :
un réglage de température de l'eau,
un réglage d'humidité de l'air, ou
un réglage de température de l'air.

7. Procédé de nage sur place selon l'une quelconque des revendications précédentes, dans lequel l'au moins un capteur (120, 310) comprend au moins l'un parmi :
un capteur électromagnétique (610a) ;
un capteur à transmission infrarouge (600b) ;
un capteur à transmission laser (610c) ;
un capteur à ultrasons (610d) ;
un capteur photoélectrique ;
un capteur radar (614) ;
une caméra vidéo (612) ;
un capteur à temps de vol (610f) ; ou
un capteur de détection et de télémétrie par la lumière (Lidar) (610g).

8. Procédé de nage sur place selon la revendication 7, dans lequel le capteur radar (614) est un capteur nanoRadar.

9. Procédé de nage sur place selon la revendication 7, dans lequel le capteur de détection et de télémétrie par la lumière (LiDAR) (610g) est un capteur nanoLidar.

10. Système de nage sur place comprenant :
un bassin de nage sur place (15) ;
au moins un capteur (120, 310) :
au moins une pompe (130) associée audit au moins un capteur (120 310) ;
au moins un processeur (110) ; et
une mémoire (140) comprenant :
un ou plusieurs modèles corporels de nageur ; et
des instructions qui, lorsqu'elles sont exécutées par l'au moins un processeur (110), configurent l'au moins un processeur (110) pour mettre en œuvre le procédé selon l'une quelconque des revendications 1 à 9.
